# EUROPEAN PATENT APPLICATION

(11) **EP 3 533 646 A1**
(43) Date of publication of application: **04.09.2019**
(21) Application number: 17864926.5
(22) Date of filing: 30.10.2017
(51) Int. Cl.: B60K 6/36, B60W 20/00, B60K 6/48

(54) **VEHICLE POWER TRANSMISSION SYSTEM AND VEHICLE PROVIDED WITH SAME**

(30) Priority: 31.10.2016 CN 201610934252
(71) Applicant: BYD Company Limited, Shenzhen, Guangdong 518118 (CN)
(72) Inventor: LIAN, Yubo, Shenzhen Guangdong 518118 (CN); LING, Heping, Shenzhen Guangdong 518118 (CN); ZHAI, Zhen, Shenzhen Guangdong 518118 (CN); XU, Youbin, Shenzhen Guangdong 518118 (CN); HUANG, Wei, Shenzhen Guangdong 518118 (CN)
(74) Representative: m patent group
(86) International application number: PCT/CN2017/108361
(87) International publication number: WO 2018/077268

(57) **Abstract**

The present invention discloses a power transmission system for a vehicle and a vehicle having same. The power transmission system for a vehicle includes: a power source; a first motor generator unit; a speed change unit, where the speed change unit is suitable for being selectively power-coupled to the power source, the speed change unit includes a speed change unit output portion, and the speed change unit output portion is suitable for outputting power from at least one of the power source and the first motor generator unit; a system power output portion; and a mode conversion device, where the speed change unit output portion is power-coupled to or power-decoupled from the system power output portion through the mode conversion device, so that the mode conversion device is suitable for decelerating the power received from the speed change unit output portion and then outputting the decelerated power to the system power output portion. In the power transmission system of the present invention, a quantity of work modes of the power transmission system may be increased, and a quantity of gears of the power transmission system is increased, thereby improving the power performance and the passing-through capability.

## Description

### FIELD

The present invention relates to the field of transmission technologies, and specifically, to a power transmission system for a vehicle and a vehicle having the power transmission system.

### BACKGROUND

With continuous consumption of energy sources, development and use of new energy vehicle models have gradually become a trend. A hybrid power automobile as one of new energy vehicle models is driven through an engine and/or a motor, has a plurality of modes, and may improve transmission efficiency and fuel economy.

However, in related technologies understood by the inventor, some hybrid power automobiles have a small quantity of driving modes and relatively low driving transmission efficiency, and therefore cannot satisfy a requirement of adaptability of vehicles to various road conditions. Particularly, after a hybrid power automobile is fed (when a power level of a battery is insufficient), the power performance and the passing-through capability of the entire vehicle are insufficient. Moreover, to implement a stationary power generation working condition, a transmission mechanism needs to be additionally added. As a result, the integration level is low, and the power generation efficiency is low.

### SUMMARY

An objective of the present invention is to at least resolve one of the technical problems in the related art to some extent. In view of this, an objective of the present invention is to propose a power transmission system for a vehicle having diversified work modes.

Another objective of the present invention is to propose a vehicle having the foregoing power transmission system.

The power transmission system for a vehicle according to an embodiment of a first aspect of the present invention includes: a power source; a first motor generator unit; a speed change unit, where the speed change unit is suitable for being selectively power-coupled to the power source, the speed change unit includes a speed change unit output portion, and the speed change unit output portion is suitable for outputting power from at least one of the power source and the first motor generator unit; a system power output portion; and a mode conversion device, where the speed change unit output portion is power-coupled to or power-decoupled from the system power output portion through the mode conversion device, and the speed change unit output portion (201) is power-coupled to the system power output portion (401) through the mode conversion device (402), so that the mode conversion device is suitable for decelerating the power received from the speed change unit output portion and then outputting the decelerated power to the system power output portion.

In the power transmission system according to this embodiment of the first aspect of the present invention, by disposing the mode conversion device in the foregoing structure form, a quantity of work modes of the power transmission system may be increased, and particularly in an L-gear mode, a quantity of gears of the power transmission system is increased, thereby improving the power performance and the passing-through capability.

A vehicle according to an embodiment of a second aspect of the present invention is provided with the power transmission system according to any embodiment of the first aspect.

Compared with the existing technology, the vehicle and the foregoing power transmission system have same advantages, and details are not described herein again.

### BRIEF DESCRIPTION OF THE DRAWINGS

FIG. 1 to FIG. 6 are schematic structural diagrams of a power transmission system according to an embodiment of the present invention;
FIG. 7 to FIG. 20 are schematic structural diagrams of a power transmission system according to an embodiment of the present invention;
FIG. 21 to FIG. 26 are schematic structural diagrams of a mode conversion device, a system power output portion and a half shaft according to an embodiment of the present invention;
FIG. 27 to FIG. 32 are schematic structural diagrams of installation of an electric driving system according to an embodiment of the present invention; and
FIG. 33 to FIG. 38 are schematic structural diagrams of a power transmission system according to an embodiment of the present invention.

### DETAILED DESCRIPTION

The following describes embodiments of the present invention in detail. Examples of the embodiments are shown in the accompanying drawings. The following embodiments described with reference to the accompanying drawings are exemplary, and are intended to describe the present invention and cannot be construed as a limitation to the present invention.

A plurality of driving systems, for example, a power transmission system 1000 can be arranged on a hybrid power vehicle. The power transmission system 1000 may be configured to drive front wheels or rear wheels of the vehicle. Detailed description is made below through an example in which the power transmission system 1000 drives the front wheels of the vehicle. Certainly, in some optional embodiments, the vehicle may further drive the rear wheels of the vehicle to rotate in combination with another driving system, so that the vehicle is a four-wheel drive vehicle. For example, the vehicle may further drive the rear wheels of the vehicle to rotate in combination with an electric driving system 700.

A power transmission system 1000 according to an embodiment of the present invention is described in detail below with reference to accompanying drawings. The power transmission system 1000 may be applied to a vehicle, for example, a hybrid power automobile.

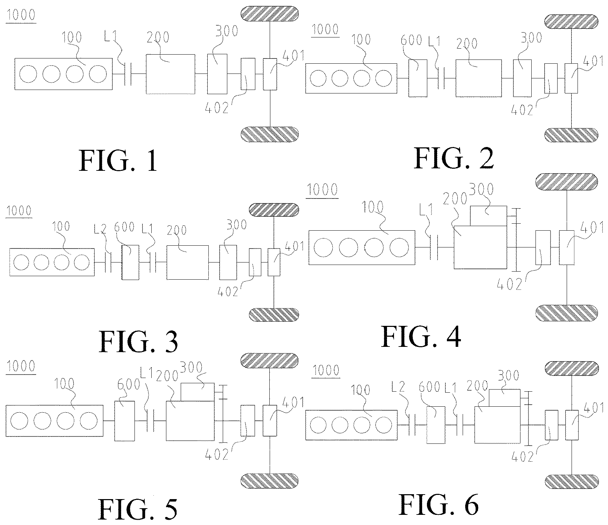

As shown in FIG. 1 to FIG. 6, the power transmission system 1000 may include: a power source 100, a first motor generator unit 300, a system power output portion 401 and a mode conversion device 402. Certainly, the power transmission system 1000 may further include other mechanical components, for example, a second motor generator 600, and a first clutch device L1.

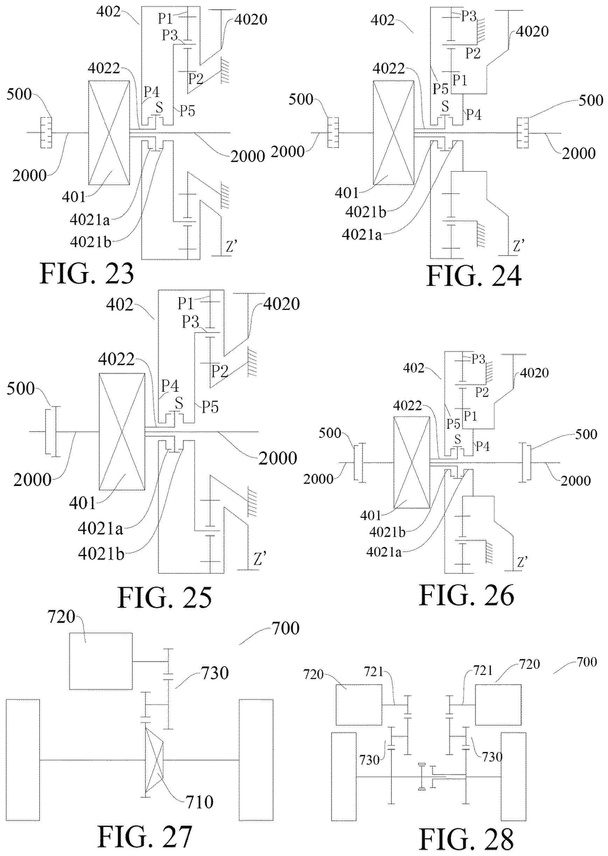

The power source 100 may be an engine, the power transmission system 1000 may further include a speed change unit 200, and the speed change unit 200 is suitable for being selectively coupled to the power source 100. As shown in FIG. 1 to FIG. 6, the power source 100 may be axially connected to the speed change unit 200, where the first clutch device L1 may be disposed between the power source 100 and the speed change unit 200, and the first clutch device L1 may control a state of connection or disconnection between the power source 100 and the speed change unit 200. Specifically, the first clutch device L1 may be a double clutch 202 in FIG. 23 to FIG. 31. The speed change unit 200 is power-coupled to a main reducer driven gear Z', so that power from the power source 100 is output to the main reducer driven gear Z' through the speed change unit 200.

The speed change unit 200 includes a speed change unit output portion 201, the speed change unit output portion 201 of the speed change unit 200 is suitable for outputting power from at least one of the power source 100 and the first motor generator unit 300, and the speed change unit output portion 201 is power-coupled to or power-decoupled from the system power output portion 201 through the mode conversion device 402. When the speed change unit output portion 201 is power-coupled to the system power output portion 401 through the mode conversion device 402, the mode conversion device 402 is suitable for decelerating power received from the speed change unit output portion 201 and then outputting the decelerated power to the system power output portion 401. To be specific, the mode conversion device 402 has an L-gear, and may decelerate the power of the speed change unit output portion 201 again.

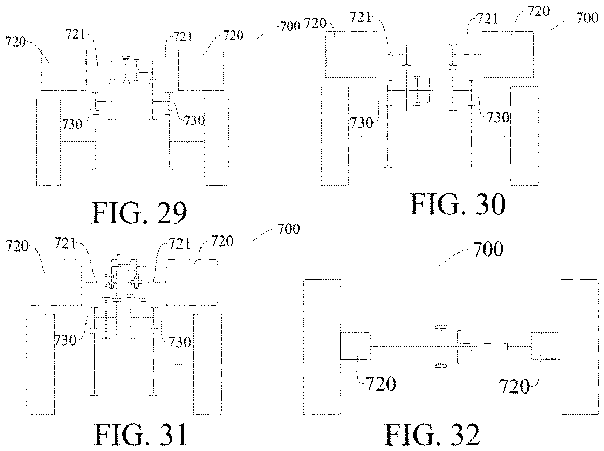

The speed change unit 200 only needs to implement a speed change and a torque change in the power of the engine, and may not need an additional design change completely by means of a speed change of an ordinary fuel vehicle, so as to facilitate miniaturization of the speed change unit 200, thereby reducing the development costs of the entire vehicle and shortening the development period. Certainly, the speed change unit 200 may have a plurality of arrangement forms. For example, the speed change unit 200 may be a transmission, or may be some other gear reducers for implementing a speed change function. Further description is made below through an example in which the speed change unit 200 is a transmission. A change in each of an input shaft, an output shaft, and a gear may form a new speed change unit 200. Detailed description is first made through the speed change unit 200 in the power transmission system 1000 shown in FIG. 29 to FIG. 31 as an example.

As shown in FIG. 29 to FIG. 31, the speed change unit 200 may include: a speed change power input portion, a speed change power output portion and a speed change unit output portion 201, and the speed change power input portion may be selectively connected to the power source 100, so as to transmit power generated by the power source 100. Optionally, a first clutch device L1 may be disposed between the speed change power input portion and the power source 100, the first clutch device L1 may include an input end and an output end, the input end is connected to the power source 100, and the output end is connected to the speed change power input portion. When the input end is connected to the output end, the power source 100 is connected to the speed change power input portion to transfer power.

The speed change power output portion is constructed to be suitable for outputting the power from the speed change power input portion to the speed change unit output portion 201 through synchronization of a speed change unit synchronizer. The speed change unit output portion 201 is suitable for outputting power from at least one of the power source 100 and the first motor generator unit 300, and the speed change unit output portion 201 is power-coupled to the mode conversion device 402, so that power from at least one of the speed change power input portion and the first motor generator unit 300 is output to the mode conversion device 402, that is, power from at least one of the speed change power input portion and a first motor generator 302 is output to a conversion device input portion 4020.

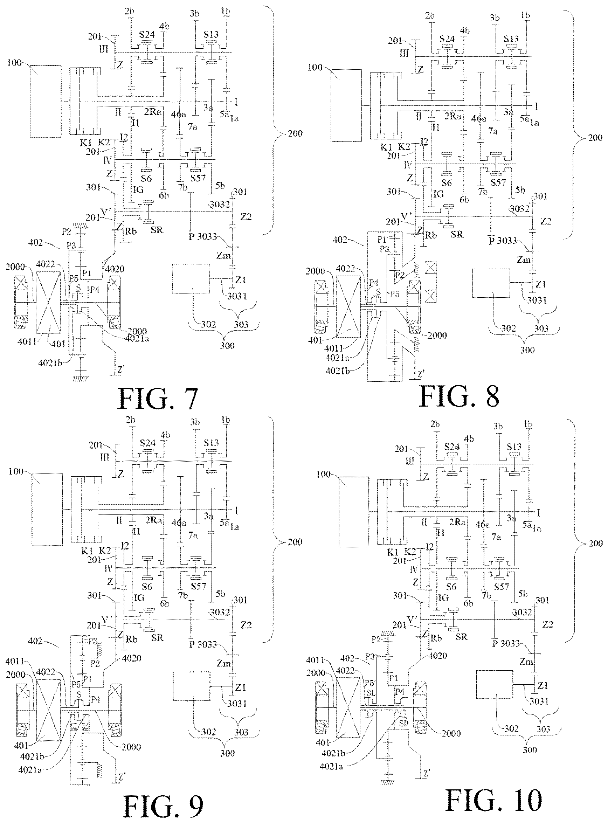

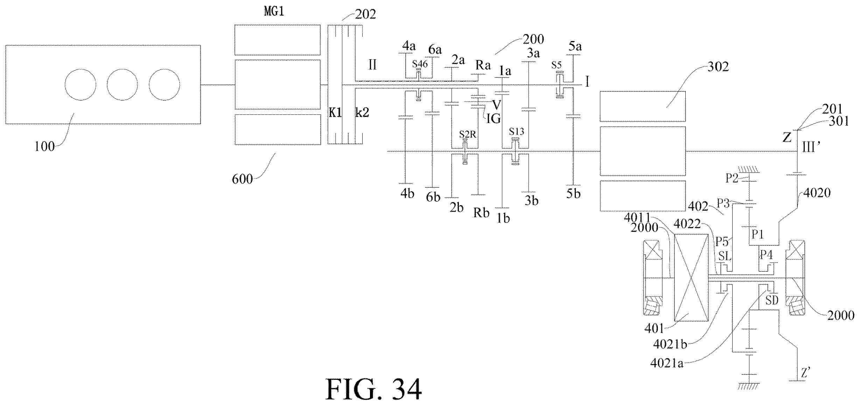

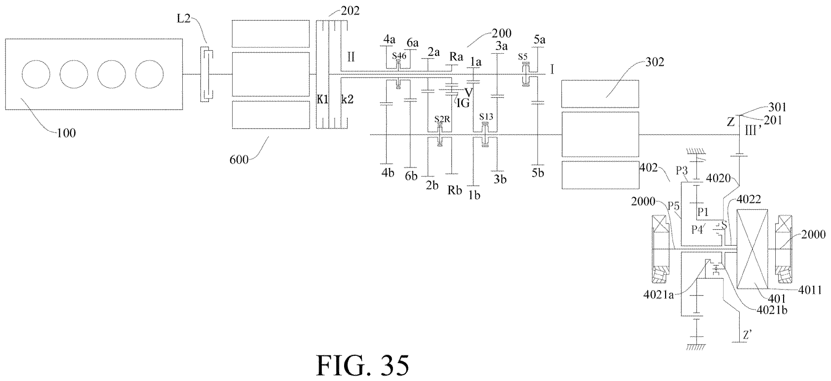

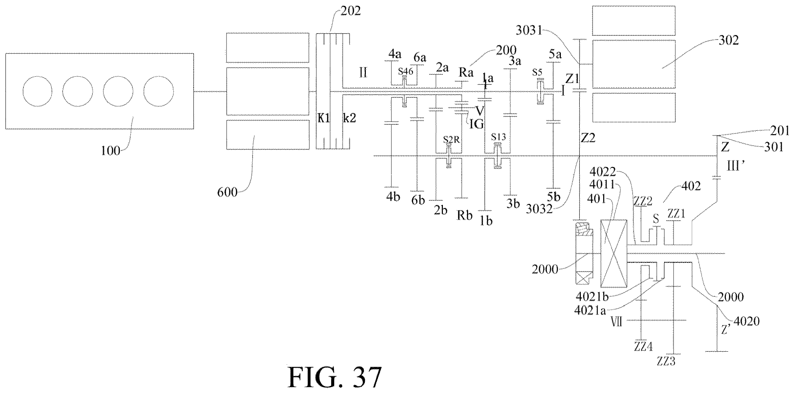

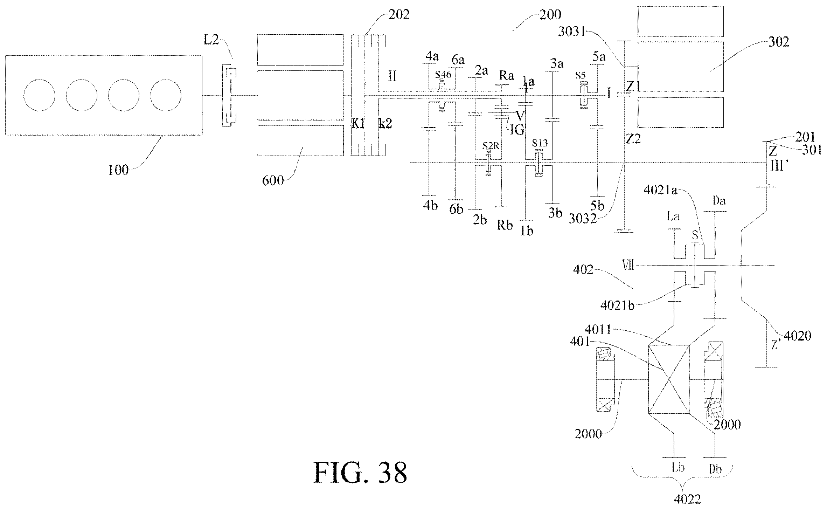

Specifically, as shown in FIG. 7 to FIG. 20 and FIG. 33 to FIG. 38, the speed change power input portion may include at least one input shaft, each input shaft may be selectively connected to the power source 100, and at least one driving gear is disposed on each input shaft.

The speed change power output portion includes: at least one output shaft, at least one driven gear is disposed on each output shaft, and the speed change unit synchronizer is disposed on the output shaft and configured to selectively synchronize the driven gear with the output shaft, so that the driven gear rotates in synchronization with the output shaft. The driven gear is meshed with a corresponding driving gear, the speed change unit output portion 201 is at least one main reducer driving gear Z, the at least one main reducer driving gear Z is fixed on the at least one output shaft in a one-to-one correspondence, and the main reducer driving gear Z is meshed with the main reducer driven gear Z'. To be specific, The speed change unit output portion 201 may be an output gear on the output shaft, the output gear may be fixed on the corresponding output shaft, and the output gear is meshed with the main reducer driven gear Z' to perform power transmission.

There may be a plurality of input shafts, and the plurality of input shafts may be sequentially coaxially nested. When the power source 100 transfers power to an input shaft, the power source 100 may be selectively connected to at least one of the plurality of input shafts.

In some optional embodiments, referring to FIG. 7 to FIG. 20, the speed change power input portion may include a first input shaft I and a second input shaft II, the second input shaft II is coaxially sleeved on the first input shaft I, and at least one driving gear is fixedly disposed on each of the first input shaft I and the second input shaft II. The speed change power output portion includes: a reverse-gear output shaft V', a reverse-gear driven gear Rb is freely sleeved on the reverse-gear output shaft V', and a main reducer driving gear Z is fixedly disposed on the reverse-gear output shaft V'. The main reducer driving gear Z is power-coupled to the mode conversion device 402, so that power from at least one of the reverse-gear driven gear Rb and the first motor generator unit 300 is output to the mode conversion device 402, one of the at least one driving gear is a reverse-gear driving gear, one of the at least one driven gear is an idle gear IG, the reverse-gear driving gear cooperates with the idle gear IG to perform transmission, and the reverse-gear driven gear Rb cooperates with the idle gear IG to perform transmission. Preferably, the idle gear IG may be a duplicate gear structure, the duplicate gear structure includes a first gear tooth I1 and a second gear tooth 12, the first gear tooth I1 is meshed with the reverse-gear driving gear Ra, and the second gear tooth I2 is meshed with the reverse-gear driven gear Rb. The speed change power output portion may further include: a first output shaft III and a second output shaft IV, at least one driven gear is freely sleeved on each of the first output shaft III and the second output shaft IV, the idle gear IG is freely sleeved on one of the first output shaft III and the second output shaft IV, and the driven gear is correspondingly meshed with the driving gear.

Specifically, as shown in FIG. 7 to FIG. 20, the speed change unit 200 may be a seven-gear transmission, the speed change power input portion may include: a first input shaft I and a second input shaft II, the first clutch device L1 may be a double clutch 202, the double clutch 202 has an input end, a first output end and a second output end, and the input end of the double clutch 202 may be selectively connected to at least one of the first output end and the second output end. To be specific, the input end of the double clutch 202 may be connected to the first output end, or the input end of the double clutch 202 may be connected to the second output end, or the input end of the double clutch 202 may be connected to both the first output end and the second output end. The first output end is connected to the first input shaft I, and the second output end is connected to the second input shaft II.

As shown in FIG. 7 to FIG. 20, a first-gear driving gear 1a, a third-gear driving gear 3a, a fifth-gear driving gear 5a and a seventh-gear driving gear 7a are fixedly disposed on the first input shaft I, and a second-reverse-gear driving gear 2Ra and a fourth-sixth-gear driving gear 46a are fixedly disposed on the second input shaft II. The second input shaft II is sleeved on the first input shaft I. In this way, the axial length of the power transmission system 1000 may be effectively shortened, thereby reducing space of the vehicle occupied by the power transmission system 1000. The foregoing second-reverse-gear driving gear 2Ra means that the gear may be used as both a second-gear driving gear and a sixth-gear driving gear use, and the foregoing fourth-sixth-gear driving gear 46a means that the gear may be used as both a fourth-gear driving gear and a sixth-gear driving gear. In this way, the axial length of the second input shaft II may be shortened, thereby better reducing the volume of the power transmission system 1000.

According to distances from the power source 100, an arrangement order of a plurality of gearshift driving gears is the second-reverse-gear driving gear 2Ra, the fourth-sixth-gear driving gear 46a, the seventh-gear driving gear 7a, the third-gear driving gear 3a, the fifth-gear driving gear 5a and the first-gear driving gear 1a. Locations of the plurality of gearshift driving gears are properly arranged, so that locations of a plurality of gearshift driven gears and a plurality of output shafts may be arranged properly. Therefore, the power transmission system 1000 may have a simple structure and a small volume.

The output shafts may include: a first output shaft III, a second output shaft IV and a reverse-gear output shaft V', a first-gear driven gear 1b, a second-gear driven gear 2b, a third-gear driven gear 3b and a fourth-gear driven gear 4b are freely sleeved on the first output shaft III, a fifth-gear driven gear 5b, a sixth-gear driven gear 6b, a seventh-gear driven gear 7b and an idle gear IG are freely sleeved on the second output shaft IV, a reverse-gear driven gear Rb is freely sleeved on the reverse-gear output shaft V', and a main reducer driving gear Z is fixed on each of the first output shaft III, the second output shaft IV and the reverse-gear output shaft V'.

The first-gear driving gear 1a is meshed with the first-gear driven gear 1b, the second-reverse-gear driving gear 2Ra is meshed with the second-gear driven gear 2b, the third-gear driving gear 3a is meshed with the third-gear driven gear 3b, the fourth-sixth-gear driving gear 46a is meshed with the fourth-gear driven gear 4b, the fifth-gear driving gear 5a is meshed with the fifth-gear driven gear 5b, the fourth-sixth-gear driving gear 46a is meshed with the sixth-gear driven gear 6b, the seventh-gear driving gear 7a is meshed with the seventh-gear driven gear 7b, the second-reverse-gear driving gear 2Ra is meshed with the first gear tooth 11 of the idle gear IG, and the second gear tooth 12 of the idle gear IG is meshed with the reverse-gear driven gear Rb.

A first-third-gear synchronizer S13 is disposed between the first-gear driven gear 1b and the third-gear driven gear 3b, and the first-third-gear synchronizer S13 may be configured to synchronize the first-gear driven gear 1b with the first output shaft III, and may be configured to synchronize the third-gear driven gear 3b with the first output shaft III.

A second-fourth-gear synchronizer S24 is disposed between the second-gear driven gear 2b and the fourth-gear driven gear 4b, and the second-fourth-gear synchronizer S24 may be configured to synchronize the second-gear driven gear 2b with the first output shaft III, and may be configured to synchronize the fourth-gear driven gear 4b with the first output shaft III.

A fifth-seventh-gear synchronizer S57 is disposed between the fifth-gear driven gear 5b and the seventh-gear driven gear 7b, and the fifth-seventh-gear synchronizer S57 may be configured to synchronize the fifth-gear driven gear 5b with the second output shaft IV, and may be configured to synchronize the seventh-gear driven gear 7b with the second output shaft IV.

One side of the sixth-gear driven gear 6b is provided with a sixth-gear synchronizer S6, and the sixth-gear synchronizer S6 may be configured to synchronize the sixth-gear driven gear 6b with the second output shaft IV.

A side of the reverse-gear driven gear Rb is provided with a reverse-gear synchronizer SR, and the reverse-gear synchronizer SR may be configured to synchronize the reverse-gear driven gear Rb with the reverse-gear output shaft V'.

In this way, a quantity of synchronizers arranged on the first output shaft III and the second output shaft IV is relatively small, thereby shortening the axial length of the first output shaft III and the axial length of the second output shaft IV, and reducing costs of the power transmission system 1000.

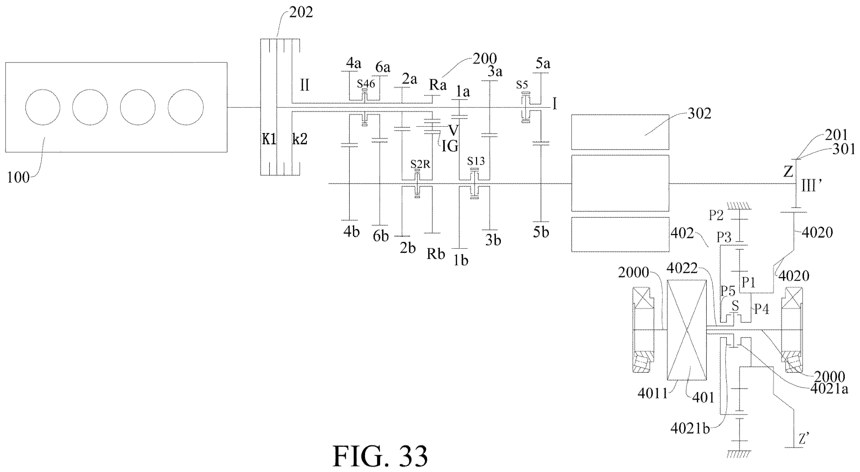

Certainly, a specific arrangement form of the speed change unit 200 is not limited thereto. An arrangement form of another speed change unit 200 is described in detail below with reference to FIG. 33 to FIG. 38.

In some other optional embodiments, referring to FIG. 33 to FIG. 38, the speed change power input portion includes a first input shaft I and a second input shaft II, the second input shaft II is coaxially sleeved on the first input shaft I, at least one first driving gear is fixedly disposed on each of the first input shaft I and the second input shaft II, at least one second driving gear is freely sleeved on each of the first input shaft I and the second input shaft II, a second driving gear is selectively connected to a corresponding input shaft, and a reverse-gear driving gear Ra is further fixedly disposed on one of the first input shaft I and the second input shaft II. The speed change power output portion includes a power output shaft III', a reverse-gear driven gear Rb and at least one first driven gear are freely sleeved on the power output shaft III', a first driven gear is correspondingly meshed with a first driving gear, at least one second driven gear is fixedly disposed on the power output shaft III', a second driven gear is correspondingly meshed with a second driving gear, and each of the reverse-gear driven gear Rb and the first driven gear is selectively connected to the power output shaft III'. The speed change unit 200 further includes a reverse-gear intermediate shaft V, an idle gear IG is fixedly disposed on the reverse-gear intermediate shaft V, and the idle gear IG is meshed with the reverse-gear driving gear Ra and is meshed with the reverse-gear driven gear Rb.

As shown in FIG. 33 to FIG. 38, the speed change unit 200 may be a six-gear transmission, and the speed change power input portion may include: a first input shaft I and a second input shaft II. The second input shaft II is coaxially sleeved on the first input shaft I. In this way, the axial length of the power transmission system 1000 may be effectively shortened, thereby reducing space of the vehicle occupied by the power transmission system 1000.

The first clutch device L1 may be a double clutch 202, the double clutch 202 has an input end, a first output end K1 and a second output end K2, and the input end may be selectively connected to at least one of the first output end and the second output end. To be specific, the input end may be connected to the first output end K1, or the input end may be connected to the second output end K2, or the input end may be connected to both the first output end K1 and the second output end K2.

The first-gear driving gear 1a and the third-gear driving gear 3a are fixedly disposed on the first input shaft I, the fifth-gear driving gear 5a is freely sleeved on the first input shaft I, the second-gear driving gear 2a and the reverse-gear driving gear Ra are fixedly disposed on the second input shaft II, and the fourth-gear driving gear 4a and the sixth-gear driving gear 6a are freely sleeved on the second input shaft II. The second input shaft II is sleeved on the first input shaft I. In this way, the axial length of the power transmission system 1000 may be effectively shortened, thereby reducing space of the vehicle occupied by the power transmission system 1000.

According to distances from the power source 100, an arrangement order of a plurality of gearshift driving gears is the fourth-gear driving gear 4a, the sixth-gear driving gear 6a, the second-gear driving gear 2a, the reverse-gear driving gear Ra, the first-gear driving gear 1a, the third-gear driving gear 3a and the fifth-gear driving gear 5a. Locations of the plurality of gearshift driving gears are properly arranged, so that locations of a plurality of gearshift driven gears and a plurality of output shafts may be arranged properly. Therefore, the power transmission system 1000 may have a simple structure and a small volume.

The first-gear driven gear 1b, the second-gear driven gear 2b, the third-gear driven gear 3b and the reverse-gear driven gear Rb are freely sleeved on the power output shaft III', and the fifth-gear driven gear 5b, the sixth-gear driven gear 6b and the fourth-gear driven gear 4b are fixedly disposed on the power output shaft III'.

The first-gear driving gear 1a is meshed with the first-gear driven gear 1b, the second-gear driving gear 2a is meshed with the second-gear driven gear 2b, the third-gear driving gear 3a is meshed with the third-gear driven gear 3b, the fourth-gear driving gear 4a is meshed with the fourth-gear driven gear 4b, the fifth-gear driving gear 5a is meshed with the fifth-gear driven gear 5b, and the sixth-gear driving gear 6a is meshed with the sixth-gear driven gear 6b.

A first-third-gear synchronizer S13 is disposed between the first-gear driven gear 1b and the third-gear driven gear 3b, and the first-third-gear synchronizer S13 may be configured to synchronize the first-gear driven gear 1b with the power output shaft III', and may be configured to synchronize the third-gear driven gear 3b with the power output shaft III'. In this way, a quantity of synchronizers arranged on the power output shaft III' may be reduced, thereby shortening the axial length of the power output shaft III', and reducing costs of the power transmission system 1000.

A second-reverse-gear synchronizer S2R is disposed between the second-gear driven gear 2b and the reverse-gear driven gear Rb, and the second-reverse-gear synchronizer S2R may be configured to synchronize the second-gear driven gear 2b with the power output shaft III', and may be configured to synchronize the reverse-gear driven gear Rb with the power output shaft III'. In this way, a quantity of synchronizers arranged on the power output shaft III' may be reduced, thereby shortening the axial length of the power output shaft III', and reducing costs of the power transmission system 1000.

A fourth-sixth-gear synchronizer S46 is disposed between the fourth-gear driving gear 4a and the sixth-gear driving gear 6a, and the fourth-sixth-gear synchronizer S46 may be configured to synchronize the fourth-gear driving gear 4a with the second input shaft II, and may be configured to synchronize the sixth-gear driving gear 6a with the second input shaft II. In this way, a quantity of synchronizers arranged on the second input shaft II may be reduced, thereby shortening the axial length of the second input shaft II, and reducing costs of the power transmission system 1000.

A side of the fifth-gear driving gear 5a is provided with a fifth-gear synchronizer S5, and the fifth-gear synchronizer S5 may be configured to synchronize the fifth-gear driving gear 5a with the first input shaft I.

Further, an idle gear IG is fixedly disposed on the reverse-gear intermediate shaft V, and the idle gear IG is meshed with the reverse-gear driving gear Ra and is meshed with the reverse-gear driven gear Rb.

Preferably, when the speed change unit output portion 201 is power-coupled to the system power output portion 401 through the mode conversion device 402, the mode conversion device 402 is further suitable for outputting, to the system power output portion 401 at an original speed, power received from the speed change unit output portion 201. It should be noted that, the original speed herein means that the rotational speed of the input end of the mode conversion device 402 is the same as the rotational speed of the output end of the mode conversion device 402.

To be specific, when the speed change unit output portion 201 is power-coupled to the system power output portion 401 through the mode conversion device 402, the mode conversion device 402 is further suitable for decelerating power received from the speed change unit output portion 201 and then outputting the decelerated power to the system power output portion 401, or outputting, to the system power output portion 401 at an original speed, power received from the speed change unit output portion 201.

Optionally, when the speed change unit output portion 201 is disconnected from the system power output portion 401 through the mode conversion device 402, the power output by the power source 100 is suitable for directly driving the first motor generator unit 300 through the speed change unit output portion 201 to perform power generation. In this way, the power generation efficiency of the power transmission system 1000 is high.

Preferably, referring to FIG. 7 to FIG. 26, the mode conversion device 402 may include a conversion device input portion 4020 and a conversion device output portion 4022, the conversion device input portion 4020 is selectively connected to the conversion device output portion 4022, and the conversion device input portion 4020 may be selectively power-coupled to the power source 100 through the first motor generator unit coupling portion 301, so that the first motor generator unit coupling portion 301 may output the power output by at least one of the power source 100 and the first motor generator 302 to the conversion device input portion 4020, the conversion device output portion 4022 is fixedly disposed on the system power output portion 401, and the conversion device input portion 4020 is selectively power-coupled to the power source 100. In an embodiment in which the power transmission system 1000 includes the speed change unit 200, the conversion device input portion 4020 is power-coupled to the speed change unit 200.

The conversion device input portion 4020 is power-coupled to the speed change unit output portion 201, the conversion device output portion 4022 is connected to the input end of the system power output portion 401, and the conversion device input portion 4020 is selectively power-coupled to the conversion device output portion 4022.

When the conversion device input portion 4020 is power-coupled to the conversion device output portion 4022, the rotational speed of the conversion device input portion 4020 is greater than or equal to the rotational speed of the conversion device output portion 4022. In this way, a quantity of gears of the power transmission system 1000 may be extended. When the conversion device input portion 4020 is disconnected from the conversion device output portion 4022, the first motor generator unit coupling portion 301 is power-coupled to the power source 100, and the power output by the power source 100 is suitable for directly driving the first motor generator unit 300 through the first motor generator unit coupling portion 301 to perform power generation. In this way, the power transfer path during power generation is short, and the power generation efficiency is high.

When the conversion device input portion 4020 is power-coupled to the speed change unit 200, the rotational speed of the conversion device input portion 4020 is suitable for being greater than the rotational speed of the conversion device output portion 4022, or the rotational speed of the conversion device input portion 4020 is suitable for being equal to the rotational speed of the conversion device output portion 4022.

When power transmission is performed between the conversion device input portion 4020 and the conversion device output portion 4022, there are two transmission modes. One transmission mode is a direct transfer mode, that is, the rotational speed of the conversion device input portion 4020 is equal to the rotational speed of the conversion device output portion 4022. The other transmission mode is a deceleration transfer mode, that is, the rotational speed of the conversion device input portion 4020 is greater than the rotational speed of the conversion device output portion 4022.

In this way, the mode conversion device 402 increases a quantity of gears of the entire vehicle, the maximum output torque of the entire vehicle may be amplified by N times, and the power performance and the passing-through capability (for example, the maximum gradeability or the de-trapping capability) are improved. Particularly, for a conventional hybrid power vehicle model, because a battery pack, a motor, and an electric control system are added, the mass of the entire vehicle is large. Only power output of an engine may be relied on after feeding. In this case, the passing-through capability and the power performance deteriorate greatly. However, a hybrid power vehicle model for which the mode conversion device 402 in the present invention is used may effectively improve the power performance and the passing-through capability. Moreover, the two transmission modes may obviously enrich driving modes of the vehicle, so that the vehicle adapts to more different working conditions.

The foregoing N is equal to a speed ratio of an L gear to a D gear. When the vehicle is in the L gear, power transmission is performed between the conversion device input portion 4020 and the conversion device output portion 4022 in the direct transfer mode, and the rotational speed of the conversion device input portion 4020 is greater than the rotational speed of the conversion device output portion 4022. When the vehicle is in the D gear, power transmission is performed between the conversion device input portion 4020 and the conversion device output portion 4022 in the deceleration transfer mode, and the rotational speed of the conversion device input portion 4020 is equal to the rotational speed of the conversion device output portion 4022.

Referring to FIG. 7 to FIG. 26, the conversion device input portion 4020 may be freely sleeved on a half shaft 2000 of the vehicle, and the conversion device output portion 4022 may be sleeved on the half shaft of the vehicle 2000.

Referring to FIG. 23 to FIG. 31, the first motor generator unit 300 includes a first motor generator unit coupling portion 301, the first motor generator unit coupling portion 301 is at least a part of the speed change unit output portion 201, and the speed change unit output portion 201 is power-coupled to the conversion device input portion 4020, so that the power output by at least one of the speed change unit 200 and the first motor generator unit 300 is output to the conversion device input portion 4020 through the speed change unit output portion 201. The speed change unit output portion 201 may be a main reducer driving gear Z.

The first motor generator unit 300 includes a first motor generator unit coupling portion 301, the first motor generator unit coupling portion 301 is power-coupled to the mode conversion device 402, and the first motor generator unit coupling portion 301 is at least a part of the speed change unit output portion 201.

Referring to FIG. 33 to FIG. 38, the first motor generator unit 300 includes a first motor generator 302 and a first motor generator unit coupling portion 301, and the first motor generator unit coupling portion 301 and the speed change unit output portion 201 are a same component. For example, the speed change unit output portion 201 may be a main reducer driving gear Z, and the main reducer driving gear Z is meshed with the main reducer driven gear Z'. The speed change unit output portion 201 is power-coupled to the mode conversion device 402, so that the power output by at least one of the speed change unit 200 and the first motor generator 302 is output to the mode conversion device 402 through the speed change unit output portion 201.

Referring to FIG. 7 to FIG. 20, the first motor generator unit 300 includes a first motor generator 302 and a first motor generator unit coupling portion 301, the speed change unit output portion 201 includes a plurality of power output portions, the first motor generator unit coupling portion 301 is one of the power output portions, each power output portion is power-coupled to the mode conversion device 402, each power output portion is a main reducer driving gear Z, and the main reducer driving gear Z is meshed with the main reducer driven gear Z'.

Referring to FIG. 7 to FIG. 20 and FIG. 33 to FIG. 38, the first motor generator unit 300 includes a first motor generator 302 and a first motor generator unit coupling portion 301, the first motor generator unit coupling portion 301 may be selectively power-coupled to the power source 100, the first motor generator 302 is power-coupled to the first motor generator unit coupling portion 301, and the first motor generator unit coupling portion 301 is power-coupled to the conversion device input portion 4020.

Optionally, referring to FIG. 33 to FIG. 35, the first motor generator unit coupling portion 301 and the first motor generator 302 are coaxially arranged.

Optionally, referring to FIG. 7 to FIG. 20 and FIG. 36 to FIG. 38, the rotating shaft of the first motor generator unit coupling portion 301 is parallel to the rotating shaft of the first motor generator 302.

Further, the first motor generator unit 300 further includes a speed reduction chain 303, the first motor generator 302 is power-coupled to the first motor generator unit coupling portion 301 through the speed reduction chain 303, and the first motor generator unit coupling portion 301 is power-coupled to the conversion device input portion 4020.

In this embodiment of the present invention, the speed reduction chain 303 may have a plurality of structure forms.

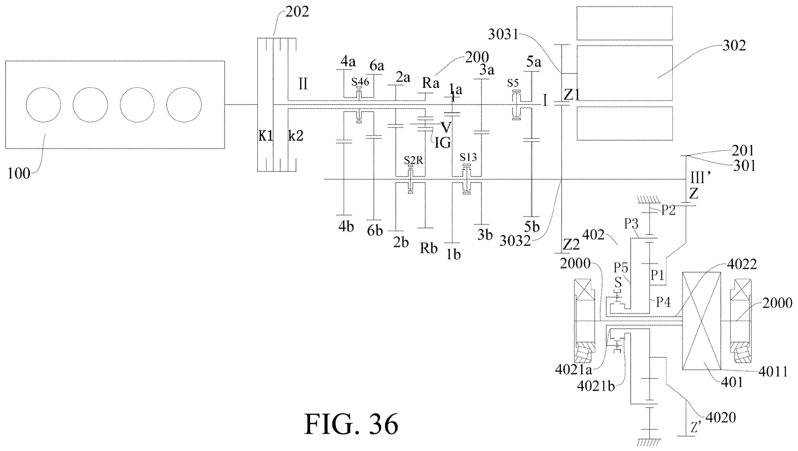

Referring to FIG. 36 to FIG. 38, the speed reduction chain 303 may include a first gear Z1 and a second gear Z2 meshed with each other, the first gear Z1 is coaxially fixedly connected to the first motor generator 302, and the first motor generator unit coupling portion 301 and the second gear Z2 are coaxially fixedly disposed.

Referring to FIG. 36 to FIG. 38, the speed reduction chain 303 may include a speed reduction chain input shaft 3031 and a speed reduction chain output shaft 3032, the speed reduction chain input shaft 3031 is fixedly connected to the motor shaft of the first motor generator 302, the speed reduction chain input shaft 3031 is fixedly connected to the first gear Z1, the speed reduction chain output shaft 3032 is fixedly connected to the second gear Z2 and the first motor generator unit coupling portion 301, the first motor generator unit coupling portion 301 is meshed with the main reducer driven gear Z', the first gear Z1 is meshed with the second gear Z2, and the diameter and the quantity of teeth of the second gear Z2 are both greater than the diameter and the quantity of teeth of the first gear Z1.

Optionally, the speed reduction chain 303 may include a first gear Z1 and a second gear Z2 meshed with each other, the first gear Z1 is coaxially fixedly connected to the first motor generator 302, and the second gear Z2 may be the first motor generator unit coupling portion 301. The speed reduction chain 303 may include a speed reduction chain input shaft 3031 and a speed reduction chain output shaft 3032, the speed reduction chain input shaft 3031 is fixedly connected to the motor shaft of the first motor generator 302, the speed reduction chain input shaft 3031 is fixedly connected to the first gear Z1, the speed reduction chain output shaft 3032 is fixedly connected to the second gear Z2, the first gear Z1 is meshed with the second gear Z2, the diameter and the quantity of teeth of the second gear Z2 are both greater than the diameter and the quantity of teeth of the first gear Z1, the second gear Z2 may be the first motor generator unit coupling portion 301, and the first motor generator unit coupling portion 301 is meshed with the main reducer driven gear Z'.

Referring to FIG. 7 to FIG. 20, the speed reduction chain 303 includes a first gear Z1, a second gear Z2 and an intermediate idle gear Zm, the intermediate idle gear Zm is meshed with the first gear Z1 and is meshed with the second gear Z2, the first gear Z1 is coaxially fixedly connected to the first motor generator 302, and the second gear Z2 is coaxially fixedly connected to the first motor generator unit coupling portion 301.

Certainly, the first motor generator unit 300 may alternatively be not provided with the speed reduction chain 303. As shown in FIG. 33 to FIG. 35, the first motor generator unit coupling portion 301 is directly meshed with the main reducer driven gear Z'.

The foregoing these advantages are all implemented through the mode conversion device 402, and a quite high integration level is provided. Some optional structure forms of the mode conversion device 402 according to this embodiment of the present invention are described below.

According to a first embodiment of the present invention, as shown in FIG. 7 to FIG. 19, the mode conversion device 402 may further include a first conversion portion 4021a and a second conversion portion 4021b, the conversion device output portion 4022 is selectively connected to one of the first conversion portion 4021a and the second conversion portion 4021b, the conversion device input portion 4020 is fixedly connected to the first conversion portion 4021a, and the conversion device output portion 4022 is connected to the second conversion portion 4021b, so that the rotational speed output by the conversion device input portion 4020 is reduced and then output to the input end of the system power output portion 401.

In this way, when the conversion device output portion 4022 is connected to the first conversion portion 4021a, the rotational speed output by the conversion device input portion 4020 is suitably made the same as the rotational speed of the input end of the system power output portion 401.

Therefore, it may be understood that, after the power generated by the power source 100 and/or the first motor generator unit 300 is transferred to the conversion device input portion 4020, the conversion device input portion 4020 may transfer the power to the first conversion portion 4021a and the second conversion portion 4021b, and by properly selecting the first conversion portion 4021a and the second conversion portion 4021b, the conversion device output portion 4022 may control the rotational speed transferred to the wheels, and then may control the speed of the vehicle, so that the speed of the vehicle is more suitable for the current vehicle condition, and travelling stability and power performance of the vehicle may be improved.

Each of the first conversion portion 4021a and the second conversion portion 4021b is disconnected from the conversion device output portion 4022, and the power source 100 is suitable for driving the first motor generator unit 300 through the conversion device input portion 4020 to perform power generation. It may be understood that, when each of the first conversion portion 4021a and the second conversion portion 4021b is disconnected from the conversion device output portion 4022, the power source 100 cannot transfer power to the system power output portion 401, the power of the power source 100 may be transferred to the first motor generator unit 300 through the conversion device input portion 4020, and the first motor generator 302 in the first motor generator unit 300 may be used as a generator to perform power generation. In this way, the stationary power generation mode of the vehicle may be implemented, so that energy waste may be avoided, energy may be saved, and power performance and economy of the vehicle may be improved.

According to a first preferred embodiment of the present invention, as shown in FIG. 7 to FIG. 18, the mode conversion device 402 may include: a main reducer driven gear Z', a planet gear mechanism P and a conversion device connector S, where the main reducer driven gear Z' is the conversion device input portion 4020, the planet gear mechanism P may include a first element P1, a second element P2 and a third element P3, and the first element P1 is fixed to the main reducer driven gear Z'. In this way, power may be transferred between the first element P1 and the main reducer driven gear Z', the second element P2 is fixedly disposed, the first element P1 is the first conversion portion 4021a, and the third element P3 is the second conversion portion 4021b. To be specific, the first element P1 may perform transmission with the third element P3, and in this transmission process, the rotational speed of the first element P1 is greater than the rotational speed of the third element P3. Moreover, the planet gear mechanism P may include: a sun gear, a planet gear, a planet carrier and a gear ring, the planet gear is installed on the planet carrier, and the planet gear is meshed between the sun gear and the gear ring. In this way, each of the sun gear, the planet carrier and the gear ring may be one of the first element P1, the second element P2 and the third element P3.

As shown in FIG. 7, the first element P1 is the sun gear, the sun gear is directly fixedly connected to the main reducer driven gear Z', the second element P2 is the gear ring, and the third element P3 is the planet carrier.

As shown in FIG. 8, the first element P1 is the gear ring, the gear ring is directly fixedly connected to the main reducer driven gear Z', the second element P2 is the sun gear, and the third element P3 is the planet carrier.

As shown in FIG. 9, the first element P1 is the sun gear, the sun gear is directly fixedly connected to the main reducer driven gear Z', the second element P2 is the planet carrier, and the third element P3 is the gear ring.

Further, the mode conversion device 402 may further include: a conversion device connector S, and the conversion device output portion 4022 is selectively connected to one of the first element P1 and the third element P3 through the conversion device connector S. Preferably, the conversion connection device may be a conversion device synchronizer. In this way, the conversion device synchronizer may selectively connect the conversion device output portion 4022 to the first element P1 and the third element P3. When the conversion device synchronizer is connected to the first element P1, the rotational speed of the conversion device input portion 4020 is the same as the rotational speed of the conversion device output portion 4022. When the conversion device synchronizer is connected to the third element P3, the rotational speed of the conversion device input portion 4020 is greater than the rotational speed of the conversion device output portion 4022.

There is a plurality of arrangement forms of the conversion device connector S, and detailed description is made below with reference to accompanying drawings.

According to a first specific embodiment of the present invention, as shown in FIG. 7 to FIG. 9, in the axial direction of the central axis of the planet gear mechanism P, the conversion device connector S is located between the first element P1 and the third element P3. In this way, one conversion device synchronizer may be saved, so that the mode conversion device 402 is simple in structure and is simple in control logic.

The conversion device output portion 4022 may be a shaft sleeve, the shaft sleeve may be sleeved on a half shaft 2000, one end of the shaft sleeve is fixedly connected to the input end of the system power output portion 401, and the conversion device connector S is fixedly disposed on the other end of the shaft sleeve. In this way the conversion device output portion 4022 may output power to the system power output portion 401 in time and reliably.

The conversion device output portion 4022 is a shaft sleeve, one end of the shaft sleeve is fixedly connected to the input end of the system power output portion 401, each of that conversion portion that is of the first conversion portion 4021a and the second conversion portion 4021b and that is closer to the input end of the system power output portion 401, and the conversion device input portion 4020 is freely sleeved on the shaft sleeve, the shaft sleeve is sleeved on a half shaft 2000 of the vehicle, and that conversion portion that is of the first conversion portion 4021a and the second conversion portion 4021b and that is farther away from the input end of the system power output portion 401 is freely sleeved on the half shaft 2000 of the vehicle.

Specifically, each of that element that is of the first element P1 and the third element P3 and that is closer to the input end of the system power output portion 401, and the main reducer driven gear Z' is freely sleeved on the shaft sleeve, the shaft sleeve is sleeved on the half shaft 2000 of the vehicle, and that element that is of the first element P1 and the third element P3 and that is farther away from the input end of the system power output portion 401 is freely sleeved on the half shaft 2000 of the vehicle.

As shown in FIG. 7, the third element P3 is closer to the system power output portion 401, and the third element P3 is freely sleeved on the shaft sleeve. As shown in FIG. 8, the first element P1 is closer to the system power output portion 401, and the first element P1 is freely sleeved on the shaft sleeve. As shown in FIG. 9, the third element P3 is closer to the system power output portion 401, and the third element P3 is freely sleeved on the shaft sleeve. In this way, the mode conversion device 402 is compact in structure and proper in arrangement.

The planet gear mechanism P further includes a first element P1 connection portion and a third element P3 connection portion, the first element P1 connection portion is fixedly connected to the first element P1, and the first element P1 connection portion is suitable for being selectively connected to the conversion device connector S. The third element P3 connection portion is fixedly connected to the third element P3, and the third element P3 connection portion is suitable for being selectively connected to the conversion device connector S. In the axial direction of the central axis of the planet gear mechanism P, the conversion device connector S is located in space defined by the first element P1 connection portion and the third element P3 connection portion. The first element P1 connection portion may facilitate connection or disconnection between the first element P1 and the conversion device synchronizer, and the third element P3 connection portion may facilitate connection or disconnection between the third element P3 and the conversion device connector S. Moreover, the conversion device connector S is located between the first element P1 connection portion and the third element P3 connection portion.

A main difference between a second specific embodiment of the present invention and the foregoing first specific embodiment is that, as shown in FIG. 10 to FIG. 12, the conversion device connector S may include a first connection portion and a second connection portion spaced apart from each other, the first connection portion is suitable for selectively connecting the conversion device output portion 4022 to the first element P1, and the second connection portion is suitable for selectively connecting the conversion device output portion 4022 to the third element P3. To be specific, when the first connection portion connects the conversion device output portion 4022 to the first element P1, the rotational speed of the conversion device input portion 4020 is the same as the rotational speed of the conversion device output portion 4022; when the second connection portion connects the conversion device output portion 4022 to the third element P3, the rotational speed of the conversion device input portion 4020 is greater than the rotational speed of the conversion device output portion 4022. In this way, the first connection portion and the second connection portion are separately arranged, so that the conversion device connector S is simple in arrangement, and cooperation between a shifting yoke mechanism and the first connection portion and the second connection portion may be facilitated.

Further, as shown in FIG. 10 to FIG. 12, the conversion device output portion 4022 may be a shaft sleeve, one end of the shaft sleeve is fixedly connected to the input end of the system power output portion 401, the other end of the shaft sleeve passes through the planet gear structure, one of the first connection portion and the second connection portion is fixedly disposed on the other end of the shaft sleeve, and the other of the first connection portion and the second connection portion is fixedly disposed on a part of the shaft sleeve not passing through the planet gear mechanism P. It should be noted that, arrangement locations of the first connection portion and the second connection portion are adjusted according to the first element P1 and the third element P3, and when the first element P1 is farther away from the system power output portion 401 relative to the third element P3, the first connection portion is fixed on the other end of the shaft sleeve, and the second connection portion is fixedly disposed on a part of the shaft sleeve not passing through the planet gear mechanism P. When the first element P1 is closer to the system power output portion 401 relative to the third element P3, the second connection portion is fixed on the other end of the shaft sleeve, and the first connection portion is fixedly disposed on a part of the shaft sleeve not passing through the planet gear mechanism P.

The conversion device output portion 4022 is a shaft sleeve, one end of the shaft sleeve is fixedly connected to the input end of the system power output portion 401, each of the first conversion portion 4021a and the second conversion portion 4021b is freely sleeved on the shaft sleeve, and the shaft sleeve is sleeved on a half shaft 2000 of the vehicle.

Specifically, as shown in FIG. 10 to FIG. 12, The planet gear mechanism P may further include a first element P1 connection portion and a third element P3 connection portion, the first element P1 connection portion is fixedly connected to the first element P1, and the first element P1 connection portion is suitable for being selectively connected to the conversion device connector S. The third element P3 connection portion is fixedly connected to the third element P3, and the third element P3 connection portion is suitable for being selectively connected to the conversion device connector S. In the axial direction of the central axis of the planet gear mechanism P, each of the first element P1 connection portion and the third element P3 connection portion is located between the first connection portion and the second connection portion. Such an aspect may help the conversion device connector S control connection between the first element P1 and the conversion device output portion 4022, and may help control connection between the third element P3 and the conversion device output portion 4022, so that the mode conversion device 402 is simple in structure, proper in deployment, and simple in control logic.

Optionally, as shown in FIG. 10 to FIG. 12, each of the first element P1, the third element P3, and the main reducer driven gear Z' may be freely sleeved on the shaft sleeve, and the shaft sleeve is sleeved on the half shaft 2000 of the vehicle. The shaft sleeve may rotate relative to the half shaft 2000, and the first element P1, the third element P3, and the main reducer driven gear Z' may rotate relative to the shaft sleeve. In this way, space on the half shaft 2000 may be properly used, arrangement reliability of the shaft sleeve, the first element P1, the third element P3, and the main reducer driven gear Z' may be ensured, and arrangement difficulty of the power transmission system 1000 may be further reduced.

The conversion device connector S may include a direct-gear synchronizer SD and a low-gear synchronizer SL, the first connection portion is a part of the direct-gear synchronizer SD, and the second connection portion is a part of the low-gear synchronizer SL. Connection between the first element P1 connection portion and the conversion device output portion 4022 through the direct-gear synchronizer SD may ensure that the rotational speed of the conversion device input portion 4020 is the same as the rotational speed of the conversion device output portion 4022, and connection between the third element P3 connection portion and the conversion device output portion 4022 through the low-gear synchronizer SL may ensure that the rotational speed of the conversion device input portion 4020 is greater than the rotational speed of the conversion device output portion 4022.

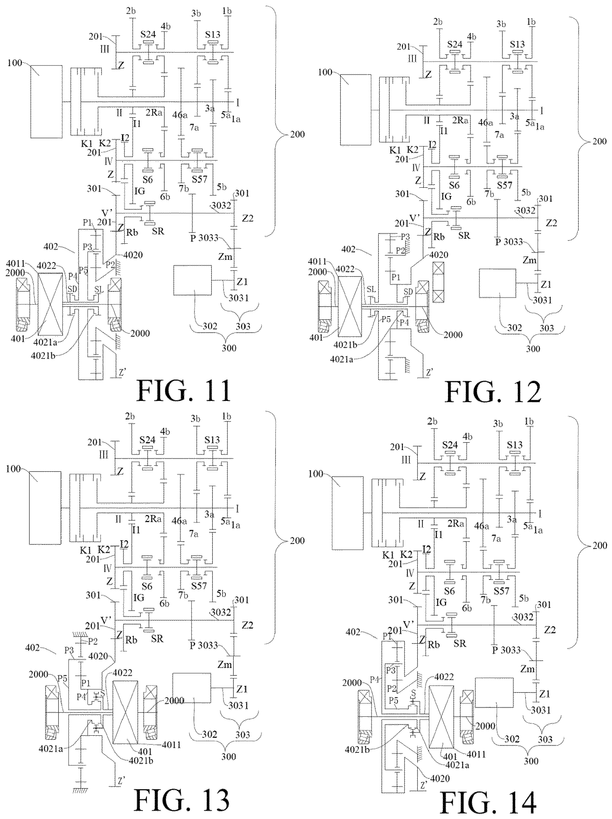

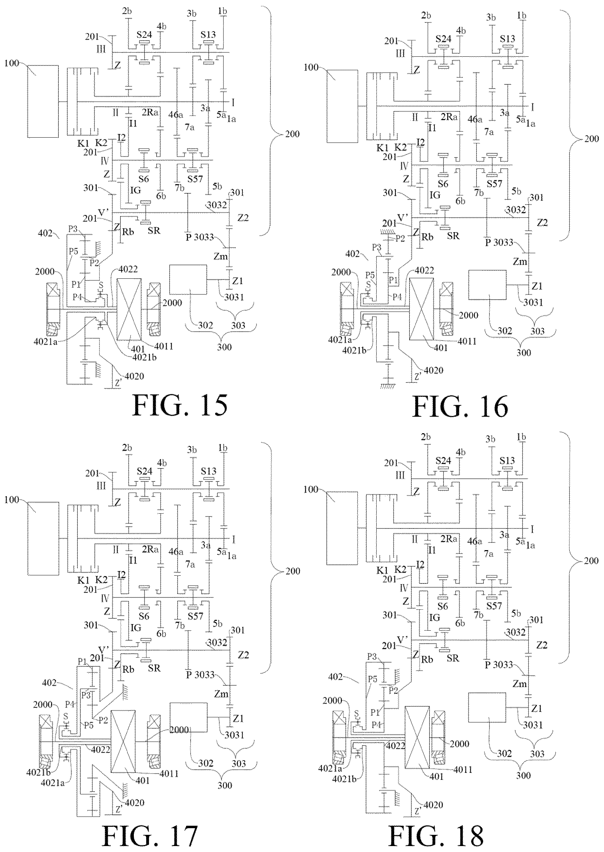

A third specific embodiment of the present invention is roughly the same as the first specific embodiment. For a specific difference, refer to the following content. As shown in FIG. 13 to FIG. 18, in the axial direction of the central axis of the planet gear mechanism P, the conversion device connector S is located on a side of the planet gear mechanism P. Specifically, as shown in FIG. 13 to FIG. 15, in the axial direction of the central axis of the planet gear mechanism P, the conversion device connector S is located on a right side of the planet gear mechanism P. As shown in FIG. 16 to FIG. 18, in the axial direction of the central axis of the planet gear mechanism P, the conversion device connector S is located on a left side of the planet gear mechanism P. In this way, in the axial direction, the planet gear mechanism P and the conversion device connector S are spaced apart from each other, thereby facilitating arrangement of the shifting yoke mechanism, reducing arrangement difficulty of the shifting yoke mechanism, and further improving arrangement convenience and control convenience of the power transmission system 1000.

Optionally, as shown in FIG. 13 to FIG. 15, the conversion device connector S is disposed on the conversion device output portion 4022, and each of the conversion device output portion 4022 and the conversion device connector S is located on a side of the planet gear mechanism P. To be specific, the conversion device output portion 4022 and the conversion device connector S may be located on a same side of the planet gear mechanism P, for example, a right side. In this way, axial arrangement of the planet gear mechanism P, the conversion device connector S and the conversion device output portion 4022 is made proper, thereby facilitating arrangement of the shifting yoke mechanism, and improving structure reliability of the mode conversion device 402.

As shown in FIG. 13 to FIG. 15, in the axial direction of the central axis of the planet gear mechanism P, from one end away from the conversion device connector S to one end close to the conversion device connector S, a connection disk part corresponding to that element that is of the first element P1 and the third element P3 and that is located on an outer side, and a connection disk part corresponding to that element that is of the first element P1 and the third element P3 and that is located on an inner side are sequentially disposed. In the radial direction of the central axis of the planet gear mechanism P, a sleeve part corresponding to that element that is of the first element P1 and the third element P3 and that is located on an inner side, and a sleeve part corresponding to that element that is of the first element P1 and the third element P3 and that is located on an outer side are sequentially sleeved from outside to inside.

Referring to FIG. 13 to FIG. 15, the conversion device output portion 4022 is a shaft sleeve, one end of the shaft sleeve is fixed to the input end of the system power output portion 401, the conversion device connector S is disposed on the other end of the shaft sleeve, and the shaft sleeve is located on a side of the planet gear mechanism P.

Referring to FIG. 16 to FIG. 18, the conversion device output portion 4022 is a shaft sleeve, one end of the shaft sleeve is fixed to the input end of the system power output portion 401, the conversion device connector S is disposed on the other end of the shaft sleeve, and the other end of the shaft sleeve passes through the planet gear mechanism P.

Exemplary description is made below through the power transmission system 1000 shown in FIG. 13 as an example.

As shown in FIG. 13, in the axial direction of the central axis of the planet gear mechanism P, from one end away from the conversion device connector S to one end close to the conversion device connector S, the connection disk part of the third element P3 and the connection disk part of the first element P1 are sequentially arranged. In the radial direction of the central axis of the planet gear mechanism P, a sleeve part corresponding to the first element P1 and a sleeve part corresponding to the third element P3 are sequentially sleeved from outside to inside. In this way, the first element P1 connection portion and the third element P3 connection portion are arranged properly in each of the axial direction and the radial direction, so that the mode conversion device 402 is arranged properly.

Additionally, optionally, as shown in FIG. 16 to FIG. 18, one part of the conversion device output portion 4022 may pass through the planet gear mechanism P, and the conversion device connector S is disposed on the foregoing one part of the conversion device output portion 4022. To be specific, the conversion device connector S and the system power output portion 401 are respectively located on two sides of the planet gear mechanism P, and the planet gear mechanism P may be sleeved on the conversion device output portion 4022, so that axial space and radial space of the mode conversion device 402 may be properly used. Specifically, the conversion device output portion 4022 may be a shaft sleeve, and the shaft sleeve is sleeved on the half shaft 2000 of the vehicle.

As shown in FIG. 16 to FIG. 18, the planet gear mechanism P may further include a first element P1 connection portion and a third element P3 connection portion, the first element P1 connection portion is fixedly connected to the first element P1, and the first element P1 connection portion is suitable for being selectively connected to the conversion device connector S. The third element P3 connection portion is fixedly connected to the third element P3, and the third element P3 connection portion is suitable for being selectively connected to the conversion device connector S. Disposition of the first element P1 connection portion and the third element P3 connection portion may help the conversion device output portion 4022 selectively connect to each of the first element P1 and the third element P3.

Optionally, as shown in FIG. 16 to FIG. 18, each of the first element P1 connection portion and the third element P3 connection portion may include a connection disk part and a sleeve part, the connection disk part is perpendicular to the central axis of the planet gear mechanism P, and the sleeve part is parallel to the central axis of the planet gear mechanism P. The outer edge of the connection disk part is fixedly connected to a corresponding element, the inner edge of the connection disk part is connected to one end of the sleeve part, and the other end of the sleeve part is suitable for selectively connecting to the conversion device connector S. In this way, disposition of the connection disk part and the sleeve part may ensure reliability of connection or disconnection between the first element P1 and the conversion device connector S, and may ensure reliability of connection or disconnection between the third element P3 and the conversion device connector S.

As shown in FIG. 16 to FIG. 18, in the axial direction of the central axis of the planet gear mechanism P, from one end away from the conversion device connector S to one end close to the conversion device connector S, a connection disk part corresponding to that element that is of the first element P1 and the third element P3 and that is located on an inner side, and a connection disk part corresponding to that element that is of the first element P1 and the third element P3 and that is located on an outer side are sequentially disposed. In the radial direction of the central axis of the planet gear mechanism P, a sleeve part corresponding to that element that is of the first element P1 and the third element P3 and that is located on an outer side, and a sleeve part corresponding to that element that is of the first element P1 and the third element P3 and that is located on an inner side are sequentially sleeved from outside to inside.

Exemplary description is made below through the power transmission system 1000 shown in FIG. 16 as an example.

As shown in FIG. 16, in the axial direction of the central axis of the planet gear mechanism P, from one end away from the conversion device connector S to one end close to the conversion device connector S, a connection disk part corresponding to the third element P3 and a connection disk part corresponding to the first element P1 are sequentially disposed, and in the radial direction of the central axis of the planet gear mechanism P, a sleeve part corresponding to the third element P3 and a sleeve part corresponding to the first element P1 are sequentially sleeved from outside to inside.

As shown in FIG. 13 to FIG. 18, each conversion device connector S may be a conversion device synchronizer.

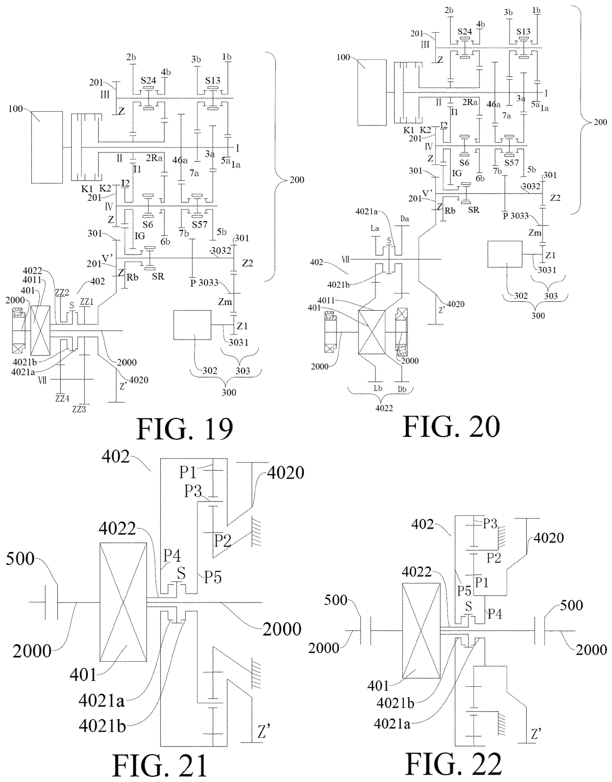

According to a second embodiment of the present invention, as shown in FIG. 19, the mode conversion device 402 may further include a first conversion portion 4021a and a second conversion portion 4021b, the conversion device output portion 4022 is selectively connected to one of the first conversion portion 4021a and the second conversion portion 4021b, the conversion device input portion 4020 is fixedly connected to the first conversion portion 4021a, and the conversion device output portion 4022 is connected to the second conversion portion 4021b, so that the rotational speed of the conversion device output portion 4022 is reduced sequentially through the first conversion portion 4021a and the second conversion portion 4021b and then output to the input end of the system power output portion 401.

In this way, when the conversion device output portion 4022 is connected to the first conversion portion 4021a, the rotational speed output by the conversion device input portion 4020 is suitably made the same as the rotational speed of the input end of the system power output portion 401.

Therefore, it may be understood that, after the power generated by the power source 100 and/or the first motor generator unit 300 is transferred to the conversion device input portion 4020, the conversion device input portion 4020 may transfer the power to the first conversion portion 4021a and the second conversion portion 4021b, and by properly selecting the first conversion portion 4021a and the second conversion portion 4021b, the conversion device output portion 4022 may control the rotational speed transferred to the wheels, and then may control the speed of the vehicle, so that the speed of the vehicle is more suitable for the current vehicle condition, and travelling stability and power performance of the vehicle may be improved.

Each of the first conversion portion 4021a and the second conversion portion 4021b is disconnected from the conversion device output portion 4022, and the power source 100 is suitable for driving the first motor generator unit 300 through the conversion device input portion 4020 to perform power generation. It may be understood that, when each of the first conversion portion 4021a and the second conversion portion 4021b is disconnected from the conversion device output portion 4022, the power source 100 cannot transfer power to the system power output portion 401, the power of the power source 100 may be transferred to the first motor generator unit 300 through the conversion device input portion 4020, and the first motor generator 302 in the first motor generator unit 300 may be used as a generator to perform power generation. In this way, the stationary power generation mode of the vehicle may be implemented, so that energy waste may be avoided, energy may be saved, and power performance and economy of the vehicle may be improved.

As shown in FIG. 19, the conversion device output portion 4022 is suitable for being connected to the first conversion portion 4021a, so that the rotational speed of the conversion device input portion 4020 is the same as the rotational speed of the input end of the system power output portion 401; and the conversion device output portion 4022 is suitable for being connected to the second conversion portion 4021b, so that the rotational speed of the conversion device input portion 4020 is reduced sequentially through the first conversion portion 4021a and the second conversion portion 4021b and then output to the system power output portion 401.

As shown in FIG. 19, in the mode conversion device 402, the conversion device input portion 4020 is a main reducer driven gear Z', the first conversion portion 4021a is a first conversion gear ZZ1, and the second conversion portion 4021b is a second conversion gear ZZ2, but the mode conversion device 402 further includes: a conversion device shaft VII. Each of the main reducer driven gear Z', the first conversion gear ZZ1 and the second conversion gear ZZ2 is freely sleeved on the half shaft 2000 of the vehicle, a third conversion gear ZZ3 and a fourth conversion gear ZZ4 are fixed on the conversion device shaft VII, the first conversion gear ZZ1 is meshed with the third conversion gear ZZ3, and the second conversion gear ZZ2 is meshed with the fourth conversion gear ZZ4. In this way, first-stage speed reduction is formed between the first conversion gear ZZ1 and the third conversion gear ZZ3, and second-stage speed reduction is formed between the second conversion gear ZZ2 and the fourth conversion gear ZZ4, so that the rotational speed of the first conversion gear ZZ1 is greater than the rotational speed of the second conversion gear ZZ2.

Specifically, as shown in FIG. 19, the main reducer driven gear Z' may form a duplicate gear structure with the first conversion gear ZZ1. In other words, one gear of the duplicate gear structure forms the main reducer driven gear Z' and the other gear forms the first conversion gear ZZ1. In this way, by disposing the duplicate gear structure, the mode conversion device 402 is simple in structure and reliable in work, and the power transmission system 1000 is simple in structure and reliable in work.

Further, as shown in FIG. 19, the mode conversion device 402 may further include a conversion device connector S, and the conversion device output portion 4022 is selectively connected to the first conversion portion 4021a or the second conversion portion 4021b through the conversion device connector S. Herein, it may be understood that, the conversion device output portion 4022 may be selectively connected to and disconnected from the first conversion portion 4021a, and the conversion device output portion 4022 may be selectively connected to and disconnected from the second conversion portion 4021b. By switching a status and a connection target of the conversion device connector S, the output rotational speed transferred to the conversion device output portion 4022 may be changed, thereby changing the rotational speed of the wheels, further enriching driving modes of the vehicle, and improving economy and power performance of the vehicle. The conversion device connector S may be a conversion device synchronizer, and the conversion device synchronizer is disposed between the first conversion gear ZZ1 and the second conversion gear ZZ2, thereby reducing a quantity of synchronizers, so that the mode conversion device 402 is simple in structure and low in costs.

As shown in FIG. 19, the conversion device output portion 4022 may be a shaft sleeve, one end of the shaft sleeve is fixedly connected to the input end of the system power output portion 401, and the conversion device connector S is disposed on the other end of the shaft sleeve. In this way, reliability of synchronization between the conversion device output portion 4022 and the corresponding first conversion gear ZZ1 and second conversion gear ZZ2 may be ensured. Moreover, through proper radial sleeve arrangement, space of the mode conversion device 402 may be effectively saved, so that the mode conversion device 402 is compact in structure and small in volume, and occupies small space of the power transmission system 1000.

Further, the shaft sleeve may be sleeved on the half shaft 2000 of the vehicle, and the second conversion gear ZZ2 may be freely sleeved on the shaft sleeve. In this way, the arrangement location of the second conversion gear ZZ2 is proper, and structure reliability of the mode conversion device 402 may be ensured.

The conversion device output portion 4022 is suitable for being disconnected from each of the first conversion portion 4021a and the second conversion portion 4021b, so that the power source 100 is suitable for directly driving the first motor generator unit 300 through the speed change unit 200 to perform power generation. In this way, the power generation transmission path is short, and the power generation efficiency is high.

According to a third embodiment of the present invention, as shown in FIG. 20, the mode conversion device 402 may further include a first conversion portion 4021a and a second conversion portion 4021b, the conversion device output portion 4022 is connected to the input end of the system power output portion 401, the conversion device input portion 4020 is suitable for outputting power from at least one of the power source 100 and the first motor generator unit 300, the conversion device input portion 4020 is selectively connected to one of the first conversion portion 4021a and the second conversion portion 4021b, and each of the first conversion portion 4021a and the second conversion portion 4021b cooperates with the conversion device output portion 4022 to perform transmission. To be specific, during power transfer, the conversion device input portion 4020 may transfer power to the conversion device output portion 4022 through the first conversion portion 4021a or the second conversion portion 4021b.

The conversion device input portion 4020 is suitable for connecting to the first conversion portion 4021a, so that the rotational speed of the conversion device input portion 4020 is the same as the rotational speed of the input end of the system power output portion 401. The conversion device input portion 4020 is suitable for connecting to the second conversion portion 4021b, so that the rotational speed of the conversion device input portion 4020 is reduced and then output to the system power output portion 401.

Specifically, as shown in FIG. 20, the conversion device input portion 4020 is a main reducer driven gear Z', the mode conversion device 402 may further include: a conversion device shaft VII, the main reducer driven gear Z' is fixedly disposed on the conversion device shaft VII, a direct-gear driving gear Da and a low-gear driving gear La are freely sleeved on the conversion device shaft VII, and the conversion device shaft VII is parallel to the half shaft 2000 of the vehicle.

The direct-gear driving gear Da may be the first conversion portion 4021a, and the low-gear driving gear La may be the second conversion portion 4021b. The conversion device output portion 4022 may include a direct-gear driven gear Db and a low-gear driven gear Lb, the direct-gear driven gear Db is meshed with the direct-gear driving gear Da, the low-gear driven gear Lb is meshed with the low-gear driving gear La, and each of the direct-gear driven gear Db and the low-gear driven gear Lb is fixedly connected to the input end of the system power output portion 401. In this way, power transfer is reliable, and transmission efficiency is high.

Moreover, the conversion device input portion 4020 is suitable for being disconnected from each of the first conversion portion 4021a and the second conversion portion 4021b, so that the power source 100 is suitable for driving the first motor generator unit 300 sequentially through the speed change unit 200 and the conversion device input portion 4020 to perform power generation.

The mode conversion device 402 may further include a conversion device connector S, and the conversion device output portion 4022 is selectively connected to the first conversion portion 4021a or the second conversion portion 4021b through the conversion device connector S. Herein, it may be understood that, the conversion device output portion 4022 may be selectively connected to and disconnected from the first conversion portion 4021a, and the conversion device output portion 4022 may be selectively connected to and disconnected from the second conversion portion 4021b. By switching a status and a connection target of the conversion device connector S, the output rotational speed transferred to the conversion device output portion 4022 may be changed, thereby changing the rotational speed of the wheels, further enriching driving modes of the vehicle, and improving economy and power performance of the vehicle.

The conversion device connector S may be a conversion device synchronizer. Optionally, the conversion device synchronizer may be fixed on the conversion device shaft VII. Preferably, the conversion device synchronizer may be located between the direct-gear driving gear Da and the low-gear driving gear La. In this way, a quantity of synchronizers may be reduced, so that the mode conversion device 402 is simple in structure and low in costs.

As shown in FIG. 21 to FIG. 26, the system power output portion 401 may be a differential and includes two half-shaft gears, and the two half-shaft gears and two half shafts 2000 of the vehicle are in a one-to-one correspondence. The power transmission system 1000 for the vehicle further includes: a power switching on/off device 500, and the power switching on/off device 500 is suitable for selectively connect at least one of the two half-shaft gears and a corresponding half shaft 2000 of the vehicle. It may be understood that, if a power switching on/off device 500 is disposed between a half shaft 2000 on one side and a corresponding half-shaft gear, the power switching on/off device 500 may control a state of connection or disconnection between the half shaft 2000 on the side and the half-shaft gear; or if a power switching on/off device 500 is disposed between each of half shafts 2000 on two sides and a corresponding half-shaft gear, each power switching on/off device 500 may control a state of connection or disconnection on a corresponding side. As shown in FIG. 11 to FIG. 13 and FIG. 15, a power switching on/off device 500 is disposed between a half shaft 2000 on a right side and a corresponding half-shaft gear. As shown in FIG. 14 and FIG. 16, there may be two power switching on/off devices 500, one power switching on/off device 500 may be disposed between a half shaft 2000 on a left side and a corresponding half-shaft gear, and the other power switching on/off device 500 may be disposed between a half shaft 2000 on a right side and a corresponding half-shaft gear.

There is a plurality of types of power switching on/off devices 500. For example, as shown in FIG. 11 and FIG. 12, the power switching on/off device 500 may be a clutch. Preferably, as shown in FIG. 13 and FIG. 14, the clutch may be a jaw clutch.

Certainly, the power switching on/off device 500 may be further of another type. For example, as shown in FIG. 15 and FIG. 16, the power switching on/off device 500 may be a synchronizer.

It should be noted that, the system power output portion 401 may be a regular open differential, for example, a bevel gear differential or a cylindrical gear differential, but is not limited thereto. Certainly, the differential 401 may alternatively be a locking differential, for example, a mechanical locking differential or an electronic locking differential. Different differential types are selected for the power transmission system 1000 according to different vehicle models. In this way, main selection bases include vehicle costs, vehicle lightweight, vehicle cross-country performance and the like.

The power transmission system 1000 for the vehicle has a plurality of work modes. Some work modes are described below in detail.

The power transmission system 1000 for the vehicle has a stationary power generation mode. When the power transmission system 1000 for the vehicle is in the stationary power generation mode, the power source 100 works, the speed change unit 200 is power-decoupled from the system power output portion 401 through the mode conversion device 402, the first motor generator unit 300 is power-decoupled from the system power output portion 401 through the mode conversion device 402, power output of the entire vehicle is interrupted, and the power output by the power source 100 is suitable for directly driving the first motor generator unit 300 through the speed change unit output portion 201 to perform power generation, to supplement power for the system. In an embodiment in which the mode conversion device 402 includes the conversion device input portion 4020 and the conversion device output portion 4022, the power source 100 works, the conversion device input portion 4020 is disconnected from the conversion device output portion 4022, power output of the entire vehicle is interrupted, and the power source 100 is suitable for directly driving the first motor generator unit 300 to perform power generation, to supplement power for the system. In this way, in stationary power generation, an additional power transmission chain does not need to be added, switching of the stationary power generation mode may be implemented only through the mode conversion device 402, the switching control is simple, and the transmission efficiency is high.

The stationary power generation function of the power transmission system 1000 for the vehicle not only may supplement power for a power battery after feeding, to ensure reliable running of power consumption of electric four-wheel drive and the entire vehicle, but also may implement a function of a mobile energy storage power station. By adding a stationary power generation gear and a reverse discharge function, the mobile energy storage power station converts the vehicle into a power bank and a power station, and a vehicle-to-load 220V alternating current discharging function (VTOL), a vehicle-to-grid power supply function (VTOG) and a vehicle-to-vehicle mutual charging function (VTOV) may be implemented at any time, thereby greatly enriching uses of the vehicle.

The power transmission system 1000 for the vehicle has a first power source driving mode, and when the power transmission system for the vehicle is in the first power source driving mode, the first motor generator unit 300 does not work, the speed change unit 200 is power-coupled to the power source 100, the mode conversion device 402 is power-coupled to the speed change unit output portion 201 and the system power output portion 401, the power output by the power source 100 is output to the system power output portion 401 sequentially through the speed change unit output portion 201 and the mode conversion device 402, and the mode conversion device 402 outputs, to the system power output portion 401 at an original speed, the power received from the speed change unit output portion 201. In an embodiment in which the mode conversion device 402 includes the conversion device input portion 4020 and the conversion device output portion 4022, the conversion device input portion 4020 is power-coupled to the power source 100, the conversion device input portion 4020 is connected to the conversion device output portion 4022, the power output by the power source 100 is output to the system power output portion 401 sequentially through the conversion device input portion 4020 and the conversion device output portion 4022, and the rotational speed of the conversion device input portion 4020 is the same as the rotational speed of the input end of the system power output portion 401; or the conversion device input portion 4020 is power-coupled to the power source 100 through the first motor generator unit coupling portion 301, the power output by the power source 100 is output to the system power output portion 401 sequentially through the first motor generator unit coupling portion 301, the conversion device input portion 4020 and the conversion device output portion 4022, and the rotational speed of the conversion device input portion 4020 is the same as the rotational speed of the input end of the system power output portion 401. To be specific, in the first power source driving mode, the vehicle is driven in dependence on the power source 100, and the input end of the system power output portion 401 and the input end of the mode conversion device 402 perform transmission at a speed ratio 1:1, that is, the mode conversion device 402 switches to the D-gear. In this case, it is normal driving.

The power transmission system 1000 for the vehicle has a second power source driving mode, and when the power transmission system for the vehicle is in the second power source driving mode, the first motor generator unit 300 does not work, the speed change unit 200 is power-coupled to the power source 100, the mode conversion device 402 is power-coupled to the speed change unit output portion 201 and the system power output portion 401, the power output by the power source 100 is output to the input end of the system power output portion 401 sequentially through the speed change unit output portion 201 and the mode conversion device 402, and the mode conversion device 402 decelerates the power received from the speed change unit output portion 201 and outputs the decelerated power to the system power output portion 401. To be specific, in the second power source driving mode, the vehicle is driven in dependence on the power source 100, the power output by the speed change unit output portion 201 is decelerated by the mode conversion device 402 and then output to the input end of the system power output portion 401, and the vehicle may enter an ultra-low speed travelling mode, that is, the mode conversion device 402 switches to the L-gear. In this case, speed reduction transmission is performed between the input end of the system power output portion 401 and the speed change unit output portion 201 through a large speed ratio, and the entire vehicle has an enhanced de-trapping capability. For example, when the vehicle climbs at a large gradient, the passing-through performance of the vehicle is better. In an embodiment in which the mode conversion device 402 includes the conversion device input portion 4020 and the conversion device output portion 4022, the conversion device input portion 4020 is power-coupled to the power source 100, the conversion device input portion 4020 is connected to the conversion device output portion 4022, the power output by the power source 100 is output to the system power output portion 401 sequentially through the conversion device input portion 4020 and the conversion device output portion 4022, and the rotational speed of the conversion device input portion 4020 is greater than the rotational speed of the input end of the system power output portion 401; or the conversion device input portion 4020 is power-coupled to the power source 100 through the first motor generator unit coupling portion 301, the power output by the power source 100 is output to the input end of the system power output portion 401 sequentially through the first motor generator unit coupling portion 301, the conversion device input portion 4020 and the conversion device output portion 4022, and the rotational speed of the conversion device input portion 4020 is greater than the rotational speed of the input end of the system power output portion 401.

The power transmission system 1000 for the vehicle has a first pure electric driving mode. When the power transmission system for the vehicle is in the first pure electric driving mode, the power source 100 does not work, the mode conversion device 402 is power-coupled to the speed change unit output portion 201 and the system power output portion 401, the power output by the first motor generator unit 300 is output to the system power output portion 401 sequentially through the speed change unit output portion 201 and the mode conversion device 402, and the mode conversion device 402 outputs, to the system power output portion 401 at an original speed, the power received from the speed change unit output portion 201. To be specific, in the first pure electric driving mode, the vehicle is driven in dependence on the first motor generator unit 300, and the input end of the system power output portion 401 and the speed change unit output portion 201 may perform transmission at a speed ratio 1:1, that is, the mode conversion device 402 switches to the D-gear. In this case, it is normal driving, the transmission efficiency is high, and the control policy is easy to implement. In an embodiment in which the mode conversion device 402 includes the conversion device input portion 4020 and the conversion device output portion 4022, the conversion device input portion 4020 is power-coupled to the first motor generator unit 300, the conversion device input portion 4020 is connected to the conversion device output portion 4022, the power output by the first motor generator unit 300 is output to the system power output portion 401 sequentially through the conversion device input portion 4020 and the conversion device output portion 4022, and the rotational speed of the conversion device input portion 4020 is the same as the rotational speed of the input end of the system power output portion 401.

The power transmission system 1000 for the vehicle has a second pure electric driving mode. When the power transmission system for the vehicle is in the second pure electric driving mode, the power source 100 does not work, the mode conversion device 402 is power-coupled to the speed change unit output portion 201 and the system power output portion 401, the power output by the first motor generator unit 300 is output to the input end of the system power output portion 401 sequentially through the speed change unit output portion 201 and the mode conversion device 402, and the mode conversion device 402 decelerates the power received from the speed change unit output portion 201 and outputs the decelerated power to the system power output portion 401. To be specific, in the second pure electric driving mode, the vehicle is driven in dependence on the first motor generator unit 300, the power output by the speed change unit output portion 201 is decelerated by the mode conversion device 402 and then output to the input end of the system power output portion 401, and the vehicle may enter an ultra-low speed travelling mode, that is, the mode conversion device 402 switches to the L-gear. In this case, speed reduction transmission is performed between the input end of the system power output portion 401 and the main reducer driven gear Z' through a large speed ratio, the output torque of electric driving may be improved, and the entire vehicle has an enhanced de-trapping capability. For example, when the vehicle climbs at a large gradient, the passing-through performance of the vehicle is better. In an embodiment in which the mode conversion device 402 includes the conversion device input portion 4020 and the conversion device output portion 4022, the conversion device input portion 4020 is power-coupled to the first motor generator unit 300, the conversion device input portion 4020 is connected to the conversion device output portion 4022, the power output by the first motor generator unit 300 is output to the system power output portion 401 sequentially through the conversion device input portion 4020 and the conversion device output portion 4022, and the rotational speed of the conversion device input portion 4020 is greater than the rotational speed of the input end of the system power output portion 401.

The power transmission system 1000 for the vehicle has a first hybrid driving mode, and when the power transmission system for the vehicle is in the first hybrid driving mode, both the power source 100 and the first motor generator unit 300 work, the speed change unit 200 is power-coupled to the power source 100, the mode conversion device 402 is power-coupled to the speed change unit output portion 201 and the system power output portion 401, the power output by the power source 100 is output to the system power output portion 401 sequentially through the speed change unit output portion 201 and the mode conversion device 402, the power output by the first motor generator unit 300 is output to the system power output portion 401 sequentially through the speed change unit output portion 201 and the mode conversion device 402, the power output by the power source 100 and the power output by the first motor generator unit 300 are coupled and then output to the mode conversion device 402, and the mode conversion device 402 outputs, to the system power output portion 401 at an original speed, the power received from the speed change unit output portion 201. To be specific, in the first hybrid driving mode, the mode conversion device 402 switches to the D-gear, the input end of the system power output portion 401 and the speed change unit output portion 201 may perform transmission at a speed ratio 1:1, the vehicle is jointly driven in dependence on the power source 100 and the first motor generator unit 300, the output of the power source 100 and the output of the first motor generator 302 are relatively independent, and changes are quite small on the basis of the conventional fuel vehicle power assembly. Even if one of the power source 100 and the first motor generator unit 300 has a fault to cause power interruption, work of the other is not affected. In an embodiment in which the mode conversion device 402 includes the conversion device input portion 4020 and the conversion device output portion 4022, the conversion device input portion 4020 is power-coupled to the power source 100 and the first motor generator unit 300, the conversion device input portion 4020 is connected to the conversion device output portion 4022, and the power output by the power source 100 and the power output by the first motor generator unit 300 are both output to the system power output portion 401 sequentially through the conversion device input portion 4020 and the conversion device output portion 4022; or the conversion device input portion 4020 is power-coupled to the power source 100 through the first motor generator unit coupling portion 301, the power output by the power source 100 is output to the system power output portion 401 sequentially through the first motor generator unit coupling portion 301, the conversion device input portion 4020 and the conversion device output portion 4022, and the rotational speed of the conversion device input portion 4020 is the same as the rotational speed of the input end of the system power output portion 401.

The power transmission system 1000 for the vehicle has a second hybrid driving mode, and when the power transmission system for the vehicle is in the second hybrid driving mode, both the power source 100 and the first motor generator unit 300 work, the speed change unit 200 is power-coupled to the power source 100, the mode conversion device 402 is power-coupled to the speed change unit output portion 201 and the system power output portion 401, the power output by the power source 100 is output to the system power output portion 401 sequentially through the speed change unit output portion 201 and the mode conversion device 402, the power output by the first motor generator unit 300 is output to the system power output portion 401 sequentially through the speed change unit output portion 201 and the mode conversion device 402, the power output by the power source 100 and the power output by the first motor generator unit 300 are coupled and then output to the mode conversion device 402, and the mode conversion device 402 decelerates the power received from the speed change unit output portion 201 and outputs the decelerated power to the system power output portion 401. To be specific, in the second hybrid driving mode, the vehicle is jointly driven in dependence on the power source 100 and the first motor generator unit 300, the power output by the speed change unit output portion 201 is decelerated by the mode conversion device 402 and then output to the input end of the system power output portion 401, and each gear speed ratio of the power source 100 and an output speed ratio of the first motor generator unit 300 are amplified, to implement output of a plurality of additional gears under the cross-country working condition, so that a hybrid power unit of the entire vehicle has double gears of the power source 100 and electric driving gears, and the passing-through performance of the vehicle is better. In an embodiment in which the mode conversion device 402 includes the conversion device input portion 4020 and the conversion device output portion 4022, the conversion device input portion 4020 is power-coupled to the power source 100 and the first motor generator unit 300, the conversion device input portion 4020 is connected to the conversion device output portion 4022, and the power output by the power source 100 and the power output by the first motor generator unit 300 are both output to the system power output portion 401 sequentially through the conversion device input portion 4020 and the conversion device output portion 4022; or the conversion device input portion 4020 is power-coupled to the power source 100 through the first motor generator unit coupling portion 301, the power output by the power source 100 is output to the system power output portion 401 sequentially through the first motor generator unit coupling portion 301, the conversion device input portion 4020 and the conversion device output portion 4022, and the rotational speed of the conversion device input portion 4020 is greater than the rotational speed of the input end of the system power output portion 401.

The power transmission system 1000 for the vehicle has a first driving power generation mode, and when the power transmission system 1000 for the vehicle is in the first driving power generation mode, the power source 100 works, the speed change unit 200 is power-coupled to the power source 100, the mode conversion device 402 is power-coupled to the speed change unit output portion 201 and the system power output portion 401, a part of the power output by the power source 100 is output to the system power output portion 401 sequentially through the speed change unit output portion 201 and the mode conversion device 402, the mode conversion device 402 outputs, to the system power output portion 401 at an original speed, the power received from the speed change unit output portion 201, and another part of the power output by the power source 100 is output to the first motor generator unit 300 through the speed change unit output portion 201, to drive the first motor generator unit 300 to perform power generation. To be specific, in the first driving power generation mode, the vehicle is driven in dependence on the power source 100, the mode conversion device 402 switches to the D-gear, the input end of the system power output portion 401 and the speed change unit output portion 201 may perform transmission at a speed ratio 1:1, the power output by the power source 100 is divided into two branches at the main reducer driven gear Z', one part of the power is output to the input end of the system power output portion 401 through the second element P2, the vehicle enters the normal travelling mode, and the other part of the power is used to drive the first motor generator unit 300 to perform power generation. In an embodiment in which the mode conversion device 402 includes the conversion device input portion 4020 and the conversion device output portion 4022, the conversion device input portion 4020 is power-coupled to the power source 100, the conversion device input portion 4020 is connected to the conversion device output portion 4022, and a part of the power output by the power source 100 is output to the system power output portion 401 sequentially through the conversion device input portion 4020 and the conversion device output portion 4022; or the conversion device input portion 4020 is power-coupled to the power source 100 through the first motor generator unit coupling portion 301, a part of the power output by the power source 100 is output to the system power output portion 401 sequentially through the first motor generator unit coupling portion 301, the conversion device input portion 4020 and the conversion device output portion 4022, and the rotational speed of the conversion device input portion 4020 is the same as the rotational speed of the input end of the system power output portion 401; and another part of the power output by the power source 100 is output to the first motor generator unit 300 through the first motor generator unit coupling portion 301, to drive the first motor generator unit 300 to perform power generation.

The power transmission system 1000 for the vehicle has a second driving power generation mode, and when the power transmission system 1000 for the vehicle is in the second driving power generation mode, the power source 100 works, the speed change unit 200 is power-coupled to the power source 100, the mode conversion device 402 is power-coupled to the speed change unit output portion 201 and the system power output portion 401, a part of the power output by the power source 100 is output to the system power output portion 401 sequentially through the speed change unit output portion 201 and the mode conversion device 402, the mode conversion device 402 decelerates the power received from the speed change unit output portion 201 and outputs the decelerated power to the system power output portion 401, and another part of the power output by the power source 100 is output to the first motor generator unit 300 through the speed change unit output portion 201, to drive the first motor generator unit 300 to perform power generation. To be specific, in the second driving power generation mode, the vehicle is driven in dependence on the power source 100, the mode conversion device 402 switches to the L-gear, the power output by the power source 100 is divided into two branches at the main reducer driven gear Z', one part of the power is decelerated by the mode conversion device 402 again and then output to the input end of the system power output portion 401, the vehicle may enter the ultra-low speed travelling mode, the passing-through performance of the vehicle is better, and the other part of the power may be used to drive the first motor generator unit 300 to perform power generation. In an embodiment in which the mode conversion device 402 includes the conversion device input portion 4020 and the conversion device output portion 4022, the conversion device input portion 4020 is power-coupled to the power source 100, the conversion device input portion 4020 is connected to the conversion device output portion 4022, and a part of the power output by the power source 100 is output to the system power output portion 401 sequentially through the conversion device input portion 4020 and the conversion device output portion 4022; or the conversion device input portion 4020 is power-coupled to the power source 100 through the first motor generator unit coupling portion 301, a part of the power output by the power source 100 is output to the system power output portion 401 sequentially through the first motor generator unit coupling portion 301, the conversion device input portion 4020 and the conversion device output portion 4022, and the rotational speed of the conversion device input portion 4020 is greater than the rotational speed of the input end of the system power output portion 401; and another part of the power output by the power source 100 is output to the first motor generator unit 300 through the first motor generator unit coupling portion 301, to drive the first motor generator unit 300 to perform power generation.

The power transmission system 1000 for the vehicle has a first braking energy recycling mode, and when the power transmission system 1000 for the vehicle is in the first braking energy recycling mode, the mode conversion device 402 is power-coupled to the speed change unit output portion 201 and the system power output portion 401, power from wheels of the vehicle drives the first motor generator unit 300 sequentially through the system power output portion 401, the mode conversion device 402, and the speed change unit output portion 201 to perform power generation, and the mode conversion device 402 outputs, to the speed change unit output portion 201 at an original speed, the power received from the system power output portion 401. To be specific, in the first braking energy recycling mode, the mode conversion device 402 switches to the D-gear, a part of the power from the wheels is consumed by a braking system, and another part may drive the first motor generator unit 300 to perform power generation, so that the power transmission system 1000 is more environmentally friendly. In an embodiment in which the mode conversion device 402 includes the conversion device input portion 4020 and the conversion device output portion 4022, the conversion device input portion 4020 is connected to the conversion device output portion 4022, the power from the wheels of the vehicle drives the first motor generator unit 300 sequentially through the system power output portion 401, the conversion device input portion 4020, and the first motor generator unit coupling portion 301 to perform power generation, and the rotational speed of the conversion device input portion 4020 is the same as the rotational speed of the input end of the system power output portion 401.

The power transmission system 1000 for the vehicle has a second braking energy recycling mode, and when the power transmission system 1000 for the vehicle is in the second braking energy recycling mode, the mode conversion device 402 is power-coupled to the speed change unit output portion 201 and the system power output portion 401, power from wheels of the vehicle drives the first motor generator unit 300 sequentially through the system power output portion 401, the mode conversion device 402, and the speed change unit output portion 201 to perform power generation, and the mode conversion device 402 accelerates the power received from the system power output portion 401 and outputs the accelerated power to the speed change unit output portion 201. To be specific, in the second braking energy recycling mode, a part of the power from the wheels is consumed by a braking system, and another part may drive the first motor generator unit 300 to perform power generation, so that the power transmission system 1000 is more environmentally friendly. Moreover, through acceleration of the mode conversion device 402, the rotational speed transferred by the speed change unit output portion 201 to the first motor generator unit 300 is high, and the power generation efficiency is high. In an embodiment in which the mode conversion device 402 includes the conversion device input portion 4020 and the conversion device output portion 4022, the conversion device input portion 4020 is connected to the conversion device output portion 4022, the power from the wheels of the vehicle drives the first motor generator unit 300 sequentially through the system power output portion 401, the conversion device input portion 4020, and the first motor generator unit coupling portion 301 to perform power generation, and the rotational speed of the conversion device input portion 4020 is greater than the rotational speed of the input end of the system power output portion 401.

The power transmission system 1000 for the vehicle has a reverse-drive starting mode, and when the power transmission system for the vehicle is in the reverse-drive starting mode, the power output by the first motor generator unit 300 is output to the power source 100 through the speed change unit output portion 201, to drive the power source 100 to start. Therefore, the starting time of the power source 100 may be shortened, to implement rapid starting.

In the power transmission system 1000 according to this embodiment of the present invention, by disposing the mode conversion device 402 in the foregoing structure form, a quantity of work modes of the power transmission system 1000 may be increased, and particularly in an L-gear mode, a quantity of gears of the power transmission system 1000 is increased, thereby improving the power performance and the passing-through capability.

The mode conversion device 402 is disposed to separate the speed change unit 200, the wheel and the first motor generator 302, so that any two of the three parties may bypass the third party to work. Additionally, such a way may further avoid a problem that a pure electric working condition needs to be implemented through a complex gear change during a speed change and a transmission chain in a usually hybrid power transmission system, and is particularly applicable to a plug-in hybrid power vehicle. Certainly, the three parties may alternatively work at the same time.

Moreover, the mode conversion device 402 can further implement ultra-low speed gear output of the power transmission system 1000. That is, in an embodiment in which there is the speed change unit 200, the power from the power source 100 is first decelerated through the speed change unit 200, and then decelerated through the L gear, and ultra-low speed gear output of the power transmission system 1000 may be implemented. Therefore, torque output of the engine may be amplified to a great extent.

According to a preferred embodiment of the present invention, as shown in FIG. 2 and FIG. 5, the power transmission system 1000 may further include a second motor generator 600, the second motor generator 600 is located between the power source 100 and the speed change unit 200, one end of the second motor generator 600 is directly power-coupled to the power source 100, and another end of the second motor generator 600 is selectively power-coupled to the speed change unit 200.

As shown in FIG. 2 and FIG. 5, the second motor generator 600 may be coaxially connected to the input end of the first clutch device L1. The second motor generator 600 may be disposed between the input end of the first clutch device L1 and the engine. In this way, when being transferred to the input end, the power of the engine inevitably passes through the second motor generator 600. In this case, the second motor generator 600 may be used as a generator to perform stationary power generation.

Certainly, the second motor generator 600 may be disposed in parallel to the first clutch device LI, the motor shaft of the second motor generator 600 may be connected to the first transmission gear, the second transmission gear may be disposed on the input end of the first clutch device LI, and the first transmission gear is meshed with the second transmission gear. In this way, the power of the engine may be transferred to the second motor generator 600 through the first transmission gear and the second transmission gear. In this way, the second motor generator 600 may be used as a generator to perform stationary power generation.

According to another preferred embodiment of the present invention, as shown in FIG. 3 and FIG. 6, the power transmission system 1000 may further include a second motor generator 600, the second motor generator 600 is located between the power source 100 and the speed change unit 200, one end of the second motor generator 600 is selectively power-coupled to the power source 100, and another end of the second motor generator 600 is selectively power-coupled to the speed change unit 200.

As shown in FIG. 3 and FIG. 6, the second clutch device L2 may be disposed between the second motor generator 600 and the engine. The second clutch device L2 may be a single clutch, and the single clutch may control connection or disconnection between the engine and the second motor generator 600, and may control connection or disconnection between the engine and the input end. By disposing the second clutch device L2, a stationary power generation state of the second motor generator 600 may be properly controlled, so that the power transmission system 1000 is simple in structure and reliable in driving mode conversion.

Preferably, the second clutch device L2 may be disposed in a rotor of the second motor generator 600. In this way, the axial length of the power transmission system 1000 may be better shortened, thereby reducing the volume of the power transmission system 1000, and improving arrangement flexibility of the power transmission system 1000 in the vehicle. Additionally, the second motor generator 600 may be further used as a starter.

Preferably, the power source 100, the second clutch device L2 and the input end of the double clutch 202 are coaxially arranged. In this way, the power transmission system 1000 is compact in structure and small in volume.

It should be noted that, for the power transmission systems 1000 in the foregoing several embodiments, in the axial direction, each second motor generator 600 may be located between the power source 100 and the first clutch device L1. Such a way may effectively reduce the axial length of the power transmission system 1000, may make location arrangement of the second motor generator 600 proper, and may improve structure compactness of the power transmission system 1000.

In an embodiment in which the power transmission system 1000 has the second motor generator 600, the first motor generator 302 may be a main driving motor of the power transmission system 1000. Therefore, the capacity and the volume of the first motor generator 302 are relatively large. For the first motor generator 302 and the second motor generator 600, the rated power of the first motor generator 302 is greater than the rated power of the second motor generator 600. In this way, a motor generator having small volume and small rated power may be selected as the second motor generator 600, so that the power transmission system 1000 is simple in structure and small in volume. Moreover, during stationary power generation, the transmission path between the second motor generator 600 and the power source 100 is short, and power generation efficiency is high, so that a part of the power of the power source 100 may be effectively converted into electric energy. The peak power of the first motor generator 302 is similarly greater than the peak power of the second motor generator 600.

Preferably, the rated power of the first motor generator 302 may be two or more times the rated power of the second motor generator 600. The peak power of the first motor generator 302 may be two or more times the peak power of the second motor generator 600. For example, the rated power of the first motor generator 302 may be 60 kw, the rated power of the second motor generator 600 may be 24 kw, the peak power of the first motor generator 302 may be 120 kw, and the peak power of the second motor generator 600 may be 44 kw.

In an embodiment in which the power transmission system 1000 has the second motor generator 600, the power transmission system 1000 for the vehicle further correspondingly has a plurality of work modes.

The power transmission system 1000 for the vehicle has a first stationary power generation mode, and when the power transmission system 1000 for the vehicle is in the first stationary power generation mode, the second motor generator 600 is power-coupled to the power source 100, the mode conversion device 402 disconnects the speed change unit output portion 201 from the system power output portion 401, and the power output by the power source 100 directly drives the second motor generator 600 to perform power generation. Because the transmission path between the second motor generator 600 and the power source 100 is short, the power generation efficiency is relatively high.

The power transmission system 1000 for the vehicle has a second stationary power generation mode, and when the power transmission system 1000 for the vehicle is in the second stationary power generation mode, the second motor generator 600 is power-coupled to the power source 100, the second motor generator 600 is power-coupled to and the speed change unit 200, the mode conversion device 402 disconnects the speed change unit output portion 201 from the system power output portion 401, a part of the power output by the power source 100 directly drives the second motor generator 600 to perform power generation, and another part of the power output by the power source 100 is output to the first motor generator unit 300 sequentially through the second motor generator 600, the speed change unit output portion 201, and the mode conversion device 402 and drives the first motor generator unit 300 to perform power generation. In this way, the power generation power is relatively large.

The power transmission system 1000 for the vehicle has a third driving power generation mode, and when the power transmission system 1000 for the vehicle is in the third driving power generation mode, the power source 100 works, the second motor generator 600 is power-coupled to the power source 100, the second motor generator 600 is power-coupled to and the speed change unit 200, the mode conversion device 402 is power-coupled to the speed change unit output portion 201 and the system power output portion 401, a part of the power output by the power source 100 is output to the system power output portion 401 sequentially through the speed change unit output portion 201 and the mode conversion device 402, the mode conversion device 402 outputs, to the system power output portion 401 at an original speed, the power received from the speed change unit output portion 201 or decelerates the power received from the speed change unit output portion and then outputs the decelerated power to the system power output portion, and another part of the power output by the power source 100 directly drives the second motor generator 600 to perform power generation. Because the transmission path between the second motor generator 600 and the power source 100 is short, the power generation efficiency is relatively high.

The power transmission system 1000 for the vehicle has a fourth driving power generation mode, and when the power transmission system 1000 for the vehicle is in the fourth driving power generation mode, the power source 100 works, the second motor generator 600 is power-coupled to the power source 100, the second motor generator 600 is power-coupled to and the speed change unit 200, the mode conversion device 402 is power-coupled to the speed change unit output portion 201 and the system power output portion 401, a first part of the power output by the power source 100 is output to the system power output portion 401 sequentially through the speed change unit output portion 201 and the mode conversion device 402, the mode conversion device 402 outputs, to the system power output portion 401 at an original speed, the power received from the speed change unit output portion 201 or decelerates the power received from the speed change unit output portion and then outputs the decelerated power to the system power output portion, a second part of the power output by the power source 100 is output to the first motor generator unit 300 through the speed change unit output portion 201, to drive the first motor generator unit 300 to perform power generation, and a third part of the power output by the power source 100 directly drives the second motor generator 600 to perform power generation. In this way, in the fourth driving power generation mode, the first motor generator unit 300 and the second motor generator 600 perform power generation at the same time, so that the power generation power is relatively large.

The power transmission system 1000 for the vehicle has a third braking energy recycling mode, and when the power transmission system 1000 for the vehicle is in the third braking energy recycling mode, the mode conversion device 402 is power-coupled to the speed change unit output portion 201 and the system power output portion 401, the second motor generator 600 is disconnected from the engine 100, the power from the wheels of the vehicle drives the second motor generator 600 sequentially through the system power output portion 401, the mode conversion device 402, and the speed change unit output portion 201 to perform power generation, and the mode conversion device 402 outputs, to the speed change unit output portion 201 at an original speed, the power received from the system power output portion 401. To be specific, in the third braking energy recycling mode, the mode conversion device 402 switches to the D-gear, a part of the power from the wheels is consumed by a braking system, and another part may drive the second motor generator 600 to perform power generation, so that the power transmission system 1000 is more environmentally friendly.

The power transmission system 1000 for the vehicle has a fourth braking energy recycling mode, and when the power transmission system 1000 for the vehicle is in the fourth braking energy recycling mode, the mode conversion device 402 is power-coupled to the speed change unit output portion 201 and the system power output portion 401, the second motor generator 600 is disconnected from the engine 100, the power from the wheels of the vehicle drives the second motor generator 600 sequentially through the system power output portion 401, the mode conversion device 402, and the speed change unit output portion 201 to perform power generation, and the mode conversion device 402 accelerates the power received from the system power output portion 401 and outputs the accelerated power to the speed change unit output portion 201. To be specific, in the fourth braking energy recycling mode, a part of the power from the wheels is consumed by a braking system, and another part may drive the second motor generator 600 to perform power generation, so that the power transmission system 1000 is more environmentally friendly. Moreover, through acceleration of the mode conversion device 402, the rotational speed transferred by the main reducer driven gear Z' to the second motor generator 600 is high, and the power generation efficiency is high.

The power transmission system 1000 for the vehicle has a rapid starting mode. When the power transmission system 1000 for the vehicle is in the rapid starting mode, the second motor generator 600 is power-coupled to the power source 100, and the power output by the second motor generator 600 directly drives the power source 100 to start. Therefore, the starting time of the engine may be shortened, to implement rapid starting.

Preferably, all of the power transmitted by the foregoing power transmission system 1000 is output to two wheels of the vehicle through the system power output portion 401, but the power transmission system 1000 is not limited thereto. Referring to FIG. 27 to FIG. 32, the power transmission system 1000 may further include an electric driving system 700, and the electric driving system 700 may be configured to drive two other wheels of the vehicle, thereby implementing four-wheel drive of the vehicle.

A plurality of arrangement forms of the electric driving system 700 according to this embodiment of the present invention is described below in detail.

The electric driving system 700 may include a driving system input portion and a driving system output portion, and the driving system output portion is suitable for outputting power from the driving system input portion to two other wheels, for example, rear wheels.

For example, as shown in FIG. 27, the electric driving system 700 further includes an electric driving system power output portion 710, and the driving system output portion is suitable for outputting power from the driving system input portion to two other wheels through the electric driving system power output portion 710. The electric driving system power output portion 710 may facilitate allocation of the power transferred from the driving system output portion to two wheels on two sides, thereby stably driving the vehicle.

Specifically, the driving system input portion may be a driving motor generator 720, and the driving system output portion is a gear reducer 730. Therefore, when the driving motor generator 720 works, power generated by the driving motor generator 720 may be transferred to the electric driving system power output portion 710 after speed reduction and torque increase of the gear reducer 730 are performed, and the electric driving system power output portion 710 may facilitate allocation of the power transferred from the driving system output portion to two wheels on two sides, thereby stably driving the vehicle.

For another example, referring to FIG. 28 to FIG. 31, the driving system input portion includes two driving motor generators 720, the driving system output portion includes two driving system output sub-portions, and each driving system output sub-portion is suitable for outputting power from a corresponding driving motor generator 720 to one corresponding wheel of two other wheels. To be specific, each wheel corresponds to one driving motor generator 720 and one driving system output sub-portion. In this way, the electric driving system power output portion 710 may be omitted, and the two driving motor generators 720 may adjust respective rotational speeds to implement a speed difference between two wheels, so that the power transmission system 1000 is simple and reliable in structure.

As shown in FIG. 28, the two other wheels are selectively synchronized. For example, a half shaft synchronizer may be disposed on one of half shafts 2000 to be suitable for being selectively connected to the other half shaft 2000. In this way, two wheels may rotate in a same direction at a same speed, or two wheels may move at different speeds, thereby ensuring travelling stability of the vehicle.

As shown in FIG. 29, the two driving motor generators 720 are selectively synchronized. For example, a synchronizer of motor output shafts may be disposed on one motor output shaft 721 to be selectively connected to the other motor output shaft 721. In this way, two wheels may rotate in a same direction at a same speed, or two wheels may move at different speeds, thereby ensuring travelling stability of the vehicle.

As shown in FIG. 30 and FIG. 31, the two driving system output sub-portions are selectively synchronized. To be specific, an output sub-portion synchronizer may be disposed on an output shaft of one of the two driving system output sub-portions and is configured to synchronize the one driving system output sub-portion with the other driving system output sub-portion. In this way, two wheels may rotate in a same direction at a same speed, or two wheels may move at different speeds, thereby ensuring travelling stability of the vehicle.

As shown in FIG. 30 and FIG. 31, the driving system output sub-portion may include a two-stage gear reducer 730, and power of the driving motor generator 720 subjected to two-stage speed reduction may be transferred to wheels to drive the wheels to rotate.

Alternatively, the driving system output sub-portion may include a two-gear transmission. The driving motor generator 720 is selectively connected to one of gears. By disposing the two-gear transmission, a rotational speed of the driving motor generator 720 output to wheels may be changed, thereby enriching driving modes of the power transmission system 1000, and improving the economy and the power performance of the vehicle.

Specifically, the driving motor generator 720 may include a motor output shaft 721, and the two-stage gear reducer 730 or the two-gear transmission may include a driving system output sub-portion input shaft, and the driving system output sub-portion input shaft is fixedly and coaxially connected to the motor output shaft 721. In this way, the driving motor generator 720 may transfer power to the driving system output sub-portion input shaft through the motor output shaft 721, and then the power is transferred to wheels through the driving system output sub-portion to drive the vehicle to move.

For still another example, as shown in FIG. 32, the electric driving system 700 may include two wheel motors, each wheel motor directly drives one corresponding wheel of two other wheels, and the two other wheels are selectively synchronized. A half shaft synchronizer may be disposed on one half shaft 2000 to be selectively connected to the other half shaft 2000. In this way, each wheel motor may drive a corresponding wheel to rotate, and by disconnecting the half shaft synchronizer, two wheels may move at different speeds, thereby ensuring travelling stability of the vehicle.

In a specific embodiment of the present invention, referring to FIG. 7 to FIG. 20, the power transmission system for the vehicle includes: a power source 100; a double clutch 202, where the double clutch 202 has an input end, a first output end and a second output end, and an output end of the power source 100 is connected to the input end of the double clutch; a first input shaft I and a second input shaft II, where the first input shaft I is connected to the first output end, the second input shaft II is connected to the second output end, the second input shaft II is coaxially sleeved on the first input shaft I, and at least one driving gear is fixedly disposed on each of the first input shaft I and the second input shaft II; a first output shaft III and a second output shaft IV, where at least one driven gear is freely sleeved on each of the first output shaft III and the second output shaft IV, the at least one driven gear is correspondingly meshed with the at least one driving gear, one of the at least one driving gear is a reverse-gear driving gear, and one of the at least one driven gear is an idle gear IG, and the reverse-gear driving gear cooperates with the idle gear IG to perform transmission; a reverse-gear output shaft V', where a reverse-gear driven gear Rb is freely sleeved on the reverse-gear output shaft V', the reverse-gear driven gear Rb cooperates with the idle gear IG to perform transmission, and each of the driven gear that is not the idle gear IG and the reverse-gear driven gear Rb is selectively connected to a corresponding output shaft; a first motor generator 302; three main reducer driving gears Z, where the three main reducer driving gears Z include a first output gear fixedly disposed on the first output shaft III, a second output gear fixedly disposed on the second output shaft IV, and a motor output gear fixedly disposed on the reverse-gear output shaft V', and the motor output gear is power-coupled to the first motor generator 302; a main reducer driven gear Z', where the main reducer driven gear Z' is meshed with each of the main reducer driving gears Z; a system power output portion, where the main reducer driven gear Z' is selectively connected to an input end 4011 of the system power output portion 401, so that power received by the main reducer driven gear Z' is suitable for being output to the system power output portion 401 at an original speed or being decelerated and then output to the system power output portion, and the system power output portion 401 is suitable for outputting the power from the main reducer driven gear Z' to two front wheels; and a rear wheel motor generator, where the rear wheel motor generator drives two rear wheels through a speed reduction mechanism.

In another specific embodiment of the present invention, referring to FIG. 33 to FIG. 38, the power transmission system for the vehicle includes: a power source 100; a double clutch 202, where the double clutch has an input end, a first output end and a second output end, and an output end of the power source 100 is connected to the input end of the double clutch 202; a first input shaft I and a second input shaft II, where the first input shaft I is connected to the first output end, the second input shaft II is connected to the second output end, the second input shaft II is coaxially sleeved on the first input shaft I, at least one first driving gear is fixedly disposed on and at least one second driving gear is freely sleeved on each of the first input shaft I and the second input shaft II, a reverse-gear driving gear Ra is further fixedly disposed on one of the second input shaft II and the first input shaft I, and the at least one second driving gear is selectively connected to a corresponding input shaft; a power output shaft III', where a reverse-gear driven gear Rb and at least one first driven gear are freely sleeved on the power output shaft III', the at least one first driven gear is correspondingly meshed with the at least one first driving gear, at least one second driven gear is fixedly disposed on the power output shaft III', the at least one second driven gear is correspondingly meshed with the at least one second driving gear, and each of the reverse-gear driven gear Rb and the at least one first driven gear is selectively connected to the power output shaft III'; a reverse-gear intermediate shaft V, an idle gear IG is fixedly disposed on the reverse-gear intermediate shaft V, and the idle gear IG is meshed with the reverse-gear driving gear Ra and is meshed with the reverse-gear driven gear Rb; a first motor generator 302, where the first motor generator 302 is power-coupled to the power output shaft III'; a main reducer driving gear Z, where the main reducer driving gear Z is fixedly disposed on the power output shaft III'; a main reducer driven gear Z', where the main reducer driven gear Z' is meshed with the main reducer driving gear Z; a system power output portion 401, where the main reducer driven gear Z' is selectively connected to an input end 4011 of the system power output portion 401, so that power received by the main reducer driven gear Z' is suitable for being output to the system power output portion 401 at an original speed or being decelerated and then output to the system power output portion, and the system power output portion 401 is suitable for outputting the power from the main reducer driven gear Z' to two front wheels; and a rear wheel motor generator, where the rear wheel motor generator drives two rear wheels through a speed reduction mechanism.

To sum up, based on the power transmission system 1000 for a vehicle according to the present invention, by disposing the mode conversion device 402, driving modes of the vehicle can be enriched, and economy and power performance of the vehicle can be improved. Moreover, the vehicle can adapt to different road conditions, the passing-through performance and the de-trapping capability of the vehicle can be notably improved, and driving experience of a driver can be improved. Moreover, the power transmission system 1000 may implement a stationary power generation function. It is ensured that when the first motor generator unit 300 performs driving and feedback, power is transmitted directly, and transmission efficiency is high, and it is also ensured that switching of stationary power generation modes is simple and reliable. Moreover, because the power of the engine and the power of the first motor generator unit 300 are coupled at the mode conversion device 402, a transmission of an original conventional fuel vehicle may be completely used as the speed change unit applied to the engine and does not need to be changed, and power output of the first motor generator unit 300 is implemented completely in dependence on switching of the mode conversion device 402. Design of such a power transmission system 1000 enables control of the driving modes independent of each other, and the structure is compact and is easily implemented.

The present invention further discloses a vehicle, and the vehicle according to an embodiment of the present invention includes the power transmission system 1000 for any one of the foregoing embodiments.

In the description of the present invention, it should be understood that, orientations or position relationships indicated by terms such as "center", "longitudinal", "transverse", "front", "back", "left", "right", "axial", "radial", and "circumferential" are orientations or position relationship shown based on the accompanying drawings, and are merely used for describing the present invention and simplifying the description, rather than indicating or implying that the apparatus or element should have a particular orientation or be constructed and operated in a particular orientation, and therefore, should not be construed as a limitation on the present invention.

In addition, terms "first" and "second" are used only for description objectives, and shall not be construed as indicating or implying relative importance or implying a quantity of indicated technical features. Therefore, a feature restricted by "first" or "second" may explicitly indicate or implicitly include at least one such feature. In the description of the present invention, unless otherwise specifically limited, "multiple" means at least two, for example, two or three.

In the present invention, unless explicitly specified or limited otherwise, the terms "mounted, " "connected, " "connection", and "fixed" should be understood broadly, for example, which may be fixed connections, detachable connections or integral connections; may be mechanical connections or electrical connections or communication with each other; may be direct connections, indirectly connected with each other through an intermediate medium, or communications inside two elements or an interaction relationship of two elements, unless otherwise specifically limited. Those of ordinary skill in the art can understand specific meanings of the terms in the present invention according to specific situations.

In the present invention, unless explicitly specified or limited otherwise, a first characteristic "on" or "under" a second characteristic may be the first characteristic in direct contact with the second characteristic, or the first characteristic in indirect contact with the second characteristic through an intermediate medium. Moreover, the first characteristic "on", "above" and "over" the second characteristic may be the first characteristic right above or obliquely above the second characteristic, or only indicates that a horizontal height of the first characteristic is greater than that of the second characteristic. The first characteristic "under", "below" and "beneath" the second characteristic may be the first characteristic right below or obliquely below the second characteristic, or only indicates that a horizontal height of the first characteristic is less than that of the second characteristic.

In the descriptions of this specification, a description of a reference term such as "an embodiment", "some embodiments", "an example", "a specific example", or "some examples" means that a specific feature, structure, material, or characteristic that is described with reference to the embodiment or the example is included in at least one embodiment or example of the present invention. In this specification, exemplary descriptions of the foregoing terms do not necessarily refer to a same embodiment or example. In addition, the described specific feature, structure, material, or characteristic may be combined in a proper manner in any one or more embodiments or examples. In addition, with no conflict, a person skilled in the art can integrate and combine different embodiments or examples and features of the different embodiments and examples described in this specification.

Although the embodiments of the present invention are shown and described above, it can be understood that the foregoing embodiments are exemplary, and should not be construed as limitations to the present invention. A person of ordinary skill in the art can make changes, modifications, replacements, and variations to the foregoing embodiments within the scope of the present invention.

## Claims

1. A power transmission system for a vehicle, comprising:
a power source;
a first motor generator unit;
a speed change unit, wherein the speed change unit is suitable for being selectively power-coupled to the power source, the speed change unit comprises a speed change unit output portion, and the speed change unit output portion is suitable for outputting power from at least one of the power source and the first motor generator unit;
a system power output portion; and
a mode conversion device, wherein the speed change unit output portion is power-coupled to or power-decoupled from the system power output portion through the mode conversion device, and the speed change unit output portion is power-coupled to the system power output portion through the mode conversion device, so that the mode conversion device is suitable for decelerating the power received from the speed change unit output portion and then outputting the decelerated power to the system power output portion.

2. The power transmission system for a vehicle according to claim 1, wherein when the speed change unit output portion is disconnected from the system power output portion through the mode conversion device, the power output by the power source is suitable for directly driving the first motor generator unit through the speed change unit output portion to perform power generation.

3. The power transmission system for a vehicle according to claim 1, wherein when the speed change unit output portion is power-coupled to the system power output portion through the mode conversion device, the mode conversion device is further suitable for outputting, to the system power output portion at an original speed, the power received from the speed change unit output portion.

4. The power transmission system for a vehicle according to claim 1, wherein the mode conversion device comprises a conversion device input portion and a conversion device output portion, the conversion device input portion is power-coupled to the speed change unit output portion, the conversion device output portion is connected to an input end of the system power output portion, and the conversion device input portion is selectively power-coupled to the conversion device output portion.

5. The power transmission system for a vehicle according to claim 4, wherein when the conversion device input portion is power-coupled to the conversion device output portion, the rotational speed of the conversion device input portion is greater than or equal to the rotational speed of the conversion device output portion.

6. The power transmission system for a vehicle according to claim 4, wherein when the conversion device input portion is disconnected from the conversion device output portion, the power output by the power source is suitable for directly driving the first motor generator unit through the speed change unit output portion to perform power generation.

7. The power transmission system for a vehicle according to claim 1, wherein the first motor generator unit comprises a first motor generator unit coupling portion, the first motor generator unit coupling portion is power-coupled to the mode conversion device, and the first motor generator unit coupling portion is at least a part of the speed change unit output portion.

8. The power transmission system for a vehicle according to claim 7, wherein the first motor generator unit comprises a first motor generator and a first motor generator unit coupling portion, the first motor generator unit coupling portion and the speed change unit output portion are a same component, and the speed change unit output portion is power-coupled to the mode conversion device, so that power output by at least one of the speed change unit and the first motor generator is output to the mode conversion device through the speed change unit output portion.

9. The power transmission system for a vehicle according to claim 7, wherein the first motor generator unit comprises a first motor generator and a first motor generator unit coupling portion, the speed change unit output portion comprises a plurality of power output portions, the first motor generator unit coupling portion is one of the power output portions, and each of the power output portions is power-coupled to the mode conversion device.

10. The power transmission system for a vehicle according to claim 4, wherein the mode conversion device further comprises a first conversion portion and a second conversion portion, the conversion device output portion is selectively connected to one of the first conversion portion and the second conversion portion, and the conversion device input portion is fixedly connected to the first conversion portion.

11. The power transmission system for a vehicle according to claim 10, wherein
the conversion device output portion is suitable for being connected to the first conversion portion, so that the rotational speed of the conversion device input portion is the same as the rotational speed of the input end of the system power output portion; and
the conversion device output portion is suitable for being connected to the second conversion portion, so that the rotational speed of the conversion device input portion is reduced and then output to the system power output portion.

12. The power transmission system for a vehicle according to claim 11, wherein the mode conversion device comprises:
a main reducer driven gear, wherein the main reducer driven gear is the conversion device input portion; and
a planet gear mechanism, wherein the planet gear mechanism comprises a first element, a second element and a third element, the first element is fixed to the main reducer driven gear, the second element is fixedly disposed, the first element is the first conversion portion, and the third element is the second conversion portion.

13. The power transmission system for a vehicle according to claim 12, wherein the mode conversion device further comprises a conversion device connector, and the conversion device output portion is selectively connected to one of the first element and the third element through the conversion device connector.

14. The power transmission system for a vehicle according to claim 13, wherein in the axial direction of the central axis of the planet gear mechanism, the conversion device connector is located between the first element and the third element.

15. The power transmission system for a vehicle according to claim 14, wherein the conversion device output portion is a shaft sleeve, one end of the shaft sleeve is fixedly connected to the input end of the system power output portion, and the conversion device connector is fixedly disposed on the other end of the shaft sleeve.

16. The power transmission system for a vehicle according to claim 13, wherein in the axial direction of the central axis of the planet gear mechanism, the conversion device connector is located on a side of the planet gear mechanism.

17. The power system for a vehicle according to claim 16, wherein the conversion device output portion is a shaft sleeve, one end of the shaft sleeve is fixed to the input end of the system power output portion, the conversion device connector is disposed on the other end of the shaft sleeve, and the shaft sleeve is located on a side of the planet gear mechanism.

18. The power system for a vehicle according to claim 17, wherein the conversion device output portion is a shaft sleeve, one end of the shaft sleeve is fixed to the input end of the system power output portion, the conversion device connector is disposed on the other end of the shaft sleeve, and the other end of the shaft sleeve passes through the planet gear mechanism.

19. The power system for a vehicle according to claim 13, wherein the conversion device connector comprises a first connection portion and a second connection portion spaced apart from each other, the first connection portion is suitable for selectively connecting the conversion device output portion to the first element, and the second connection portion is suitable for selectively connecting the conversion device output portion to the third element.

20. The power system for a vehicle according to claim 19, wherein the conversion device connector comprises a direct-gear synchronizer and a low-gear synchronizer, the first connection portion is a part of the direct-gear synchronizer, and the second connection portion is a part of the low-gear synchronizer.

21. The power transmission system for a vehicle according to claim 10, wherein the conversion device output portion is suitable for being connected to the first conversion portion, so that the rotational speed of the conversion device input portion is the same as the rotational speed of the input end of the system power output portion; and
the conversion device output portion is suitable for being connected to the second conversion portion, so that the rotational speed of the conversion device input portion is reduced sequentially through the first conversion portion and the second conversion portion and then output to the system power output portion.

22. The power system for a vehicle according to claim 21, wherein the mode conversion device comprises:
a main reducer driven gear, wherein the main reducer driven gear is the conversion device input portion;
a first conversion gear and a second conversion gear, wherein each of the main reducer driven gear, the first conversion gear and the second conversion gear is freely sleeved on a half shaft of the vehicle; and
a conversion device shaft, wherein a third conversion gear and a fourth conversion gear are fixed on the conversion device shaft, the first conversion gear is meshed with the third conversion gear, and the second conversion gear is meshed with the fourth conversion gear; and the first conversion gear is the first conversion portion, and the second conversion gear is the second conversion portion.

23. The power transmission system for a vehicle according to claim 10, wherein the conversion device output portion is suitable for being disconnected from each of the first conversion portion and the second conversion portion, so that the power source is suitable for directly driving the first motor generator unit through the speed change unit to perform power generation.

24. The power system for a vehicle according to claim 11, wherein the conversion device output portion is a shaft sleeve, one end of the shaft sleeve is fixedly connected to the input end of the system power output portion, each of that conversion portion that is of the first conversion portion and the second conversion portion and that is closer to the input end of the system power output portion, and the conversion device input portion is freely sleeved on the shaft sleeve, the shaft sleeve is sleeved on a half shaft of the vehicle, and that conversion portion that is of the first conversion portion and the second conversion portion and that is farther away from the input end of the system power output portion is freely sleeved on the half shaft of the vehicle.

25. The power system for a vehicle according to claim 11, wherein the conversion device output portion is a shaft sleeve, one end of the shaft sleeve is fixedly connected to the input end of the system power output portion, each of the first conversion portion and the second conversion portion is freely sleeved on the shaft sleeve, and the shaft sleeve is sleeved on a half shaft of the vehicle.

26. The power transmission system for a vehicle according to claim 4, wherein the mode conversion device further comprises a first conversion portion and a second conversion portion, the conversion device input portion is selectively connected to one of the first conversion portion and the second conversion portion, and each of the first conversion portion and the second conversion portion cooperates with the conversion device output portion to perform transmission.

27. The power transmission system for a vehicle according to claim 26, wherein
the conversion device input portion is suitable for being connected to the first conversion portion, so that the rotational speed of the conversion device input portion is the same as the rotational speed of the input end of the system power output portion; and
the conversion device input portion is suitable for being connected to the second conversion portion, so that the rotational speed of the conversion device input portion is reduced and then output to the system power output portion.

28. The power system for a vehicle according to claim 27, wherein
the mode conversion device comprises:
a main reducer driven gear, wherein the main reducer driven gear is the conversion device input portion; and
a conversion device shaft, wherein the main reducer driven gear is fixedly disposed on the conversion device shaft, a direct-gear driving gear and a low-gear driving gear are freely sleeved on the conversion device shaft, and the conversion device shaft is parallel to a half shaft of the vehicle;
the direct-gear driving gear is the first conversion portion, and the low-gear driving gear is the second conversion portion; and
the conversion device output portion comprises a direct-gear driven gear and a low-gear driven gear, the direct-gear driven gear is meshed with the direct-gear driving gear, the low-gear driven gear is meshed with the low-gear driving gear, and each of the direct-gear driven gear and the low-gear driven gear is fixedly connected to the input end of the system power output portion.

29. The power transmission system for a vehicle according to claim 26, wherein the conversion device input portion is suitable for being disconnected from each of the first conversion portion and the second conversion portion, so that the power source is suitable for directly driving the first motor generator unit through the speed change unit to perform power generation.

30. The power transmission system for a vehicle according to any one of claims 12, 22, and 28, wherein the speed change unit output portion is a main reducer driving gear, and the main reducer driving gear is meshed with the main reducer driven gear.

31. The power transmission system for a vehicle according to claim 4, wherein the first motor generator unit comprises a first motor generator and a first motor generator unit coupling portion, the first motor generator is power-coupled to the first motor generator unit coupling portion, and the first motor generator unit coupling portion is power-coupled to the conversion device input portion.

32. The power transmission system for a vehicle according to claim 31, wherein the first motor generator unit further comprises a speed reduction chain, the first motor generator is power-coupled to the first motor generator unit coupling portion through the speed reduction chain, and the first motor generator unit coupling portion is power-coupled to the conversion device input portion.

33. The power transmission system for a vehicle according to claim 1, wherein the speed change unit comprises:
a speed change power input portion, wherein the speed change power input portion can be selectively connected to the power source, to transmit the power generated by the power source; and
a speed change power output portion, wherein
the speed change power output portion is constructed to be suitable for outputting the power from the speed change power input portion to the speed change unit output portion through synchronization of a speed change unit synchronizer.

34. The power transmission system for a vehicle according to claim 33, wherein the speed change power input portion comprises at least one input shaft, each input shaft can be selectively connected to the power source, and at least one driving gear is disposed on each input shaft; and
the speed change power output portion comprises: at least one output shaft, at least one driven gear is disposed on each output shaft, the driven gear is meshed with the corresponding driving gear, the speed change unit output portion is at least one main reducer driving gear, and the at least one main reducer driving gear is fixed on the at least one output shaft in a one-to-one correspondence.

35. The power transmission system for a vehicle according to claim 34, wherein there is a plurality of input shafts that is sequentially coaxially nested, and when the power source transfers power to the input shafts, the power source can be selectively connected to one of the plurality of input shafts.

36. The power transmission system for a vehicle according to claim 34, wherein the speed change power output portion further comprises: a reverse-gear output shaft, a reverse-gear driven gear is freely sleeved on the reverse-gear output shaft, a main reducer driving gear is fixedly disposed on the reverse-gear output shaft, and the main reducer driving gear is power-coupled to the mode conversion device, so that power from at least one of the reverse-gear driven gear and the first motor generator unit is output to the mode conversion device; and
one of the at least one driving gear is a reverse-gear driving gear, one of the at least one driven gear is an idle gear, the reverse-gear driving gear cooperates with the idle gear to perform transmission, and the reverse-gear driven gear cooperates with the idle gear to perform transmission.

37. The power transmission system for a vehicle according to claim 36, wherein the idle gear is a duplicate gear structure, the duplicate gear structure comprises a first gear tooth and a second gear tooth, the first gear tooth is meshed with the reverse-gear driving gear, and the second gear tooth is meshed with the reverse-gear driven gear.

38. The power transmission system for a vehicle according to claim 1, wherein the system power output portion is a differential, and comprises two half shaft gears, and the two half shaft gears and two half shafts of the vehicle are in a one-to-one correspondence; and
the power transmission system for the vehicle further comprises: a power switching on/off device, and the power switching on/off device is suitable for selectively connecting at least one of the two half shaft gears to a corresponding half shaft of the vehicle.

39. The power transmission system for a vehicle according to claim 38, wherein the power switching on/off device is a clutch or a synchronizer.

40. The power transmission system for a vehicle according to claim 1, further comprising: a second motor generator, wherein the second motor generator is located between the power source and the speed change unit, one end of the second motor generator is directly power-coupled to the power source, and another end of the second motor generator is selectively power-coupled to the speed change unit.

41. The power transmission system for a vehicle according to claim 1, further comprising: a second motor generator, wherein the second motor generator is located between the power source and the speed change unit, one end of the second motor generator is selectively power-coupled to the power source, and another end of the second motor generator is selectively power-coupled to the speed change unit.

42. The power transmission system for a vehicle according to claim 1, wherein the system power output portion is suitable for outputting power to two wheels of the vehicle; and
the power transmission system for the vehicle further comprises an electric driving system, and the electric driving system is configured to drive two other wheels of the vehicle.

43. The power transmission system for a vehicle according to claim 42, wherein the electric driving system comprises a driving system input portion and a driving system output portion, and the driving system output portion is suitable for outputting power from the driving system input portion to the two other wheels.

44. The power transmission system for a vehicle according to claim 43, wherein the electric driving system further comprises an electric driving system power output portion, and the driving system output portion is suitable for outputting power from the driving system input portion to the two other wheels through the electric driving system power output portion.

45. The power transmission system for a vehicle according to claim 43, wherein the driving system input portion is a driving motor generator, and the driving system output portion is a gear reducer.

46. The power transmission system for a vehicle according to claim 45, wherein the driving system input portion comprises two driving motor generators; and the driving system output portion comprises two driving system output sub-portions, and each of the driving system output sub-portions is suitable for outputting power from a corresponding driving motor generator to one corresponding wheel of the two other wheels.

47. The power transmission system for a vehicle according to claim 46, wherein the two other wheels are selectively synchronized, the two driving motor generators are selectively synchronized or the two driving system output sub-portions are selectively synchronized.

48. The power transmission system for a vehicle according to claim 42, wherein the electric driving system comprises two wheel motors, each of the wheel motors directly drives one corresponding wheel of the two other wheels, and the two other wheels are selectively synchronized.

49. The power transmission system for a vehicle according to claim 1, wherein the power transmission system for the vehicle has a first power source driving mode, and when the power transmission system for the vehicle is in the first power source driving mode, the first motor generator unit does not work, the speed change unit is power-coupled to the power source, the mode conversion device is power-coupled to the speed change unit output portion and the system power output portion, the power output by the power source is output to the system power output portion sequentially through the speed change unit output portion and the mode conversion device, and the mode conversion device outputs, to the system power output portion at an original speed, the power received from the speed change unit output portion.

50. The power transmission system for a vehicle according to claim 1, wherein the power transmission system for the vehicle has a second power source driving mode, and when the power transmission system for the vehicle is in the second power source driving mode, the first motor generator unit does not work, the speed change unit is power-coupled to the power source, the mode conversion device is power-coupled to the speed change unit output portion and the system power output portion, the power output by the power source is output to an input end of the system power output portion sequentially through the speed change unit output portion and the mode conversion device, and the mode conversion device decelerates the power received from the speed change unit output portion and outputs the decelerated power to the system power output portion.

51. The power transmission system for a vehicle according to claim 1, wherein the power transmission system for the vehicle has a first pure electric driving mode, and when the power transmission system for the vehicle is in the first pure electric driving mode, the power source does not work, the mode conversion device is power-coupled to the speed change unit output portion and the system power output portion, the power output by the first motor generator unit is output to the system power output portion sequentially through the speed change unit output portion and the mode conversion device, and the mode conversion device outputs, to the system power output portion at an original speed, the power received from the speed change unit output portion.

52. The power transmission system for a vehicle according to claim 1, wherein the power transmission system for the vehicle has a second pure electric driving mode, and when the power transmission system for the vehicle is in the second pure electric driving mode, the power source does not work, the mode conversion device is power-coupled to the speed change unit output portion and the system power output portion, the power output by the first motor generator unit is output to an input end of the system power output portion sequentially through the speed change unit output portion and the mode conversion device, and the mode conversion device decelerates the power received from the speed change unit output portion and outputs the decelerated power to the system power output portion.

53. The power transmission system for a vehicle according to claim 1, wherein the power transmission system for the vehicle has a first hybrid driving mode, and when the power transmission system for the vehicle is in the first hybrid driving mode, both the power source and the first motor generator unit work, the speed change unit is power-coupled to the power source, the mode conversion device is power-coupled to the speed change unit output portion and the system power output portion, the power output by the power source is output to the system power output portion sequentially through the speed change unit output portion and the mode conversion device, the power output by the first motor generator unit is output to the system power output portion sequentially through the speed change unit output portion and the mode conversion device, the power output by the power source and the power output by the first motor generator unit are coupled and then output to the mode conversion device, and the mode conversion device outputs, to the system power output portion at an original speed, the power received from the speed change unit output portion.

54. The power transmission system for a vehicle according to claim 1, wherein the power transmission system for the vehicle has a second hybrid driving mode, and when the power transmission system for the vehicle is in the second hybrid driving mode, both the power source and the first motor generator unit work, the speed change unit is power-coupled to the power source, the mode conversion device is power-coupled to the speed change unit output portion and the system power output portion, the power output by the power source is output to the system power output portion sequentially through the speed change unit output portion and the mode conversion device, the power output by the first motor generator unit is output to the system power output portion sequentially through the speed change unit output portion and the mode conversion device, the power output by the power source and the power output by the first motor generator unit are coupled and then output to the mode conversion device, and the mode conversion device decelerates the power received from the speed change unit output portion and outputs the decelerated power to the system power output portion.

55. The power transmission system for a vehicle according to claim 1, wherein the power transmission system for the vehicle has a first driving power generation mode, and when the power transmission system for the vehicle is in the first driving power generation mode, the power source works, the speed change unit is power-coupled to the power source, the mode conversion device is power-coupled to the speed change unit output portion and the system power output portion, a part of the power output by the power source is output to the system power output portion sequentially through the speed change unit output portion and the mode conversion device, the mode conversion device outputs, to the system power output portion at an original speed, the power received from the speed change unit output portion, and another part of the power output by the power source is output to the first motor generator unit through the speed change unit output portion, to drive the first motor generator unit to perform power generation.

56. The power transmission system for a vehicle according to claim 1, wherein the power transmission system for the vehicle has a second driving power generation mode, and when the power transmission system for the vehicle is in the second driving power generation mode, the power source works, the speed change unit is power-coupled to the power source, the mode conversion device is power-coupled to the speed change unit output portion and the system power output portion, a part of the power output by the power source is output to the system power output portion sequentially through the speed change unit output portion and the mode conversion device, the mode conversion device decelerates the power received from the speed change unit output portion and outputs the decelerated power to the system power output portion, and another part of the power output by the power source is output to the first motor generator unit through the speed change unit output portion, to drive the first motor generator unit to perform power generation.

57. The power transmission system for a vehicle according to claim 1, wherein the power transmission system for the vehicle has a first braking energy recycling mode, and when the power transmission system for the vehicle is in the first braking energy recycling mode, the mode conversion device is power-coupled to the speed change unit output portion and the system power output portion, power from wheels of the vehicle drives the first motor generator unit sequentially through the system power output portion, the mode conversion device, and the speed change unit output portion to perform power generation, and the mode conversion device outputs, to the speed change unit output portion at an original speed, the power received from the system power output portion.

58. The power transmission system for a vehicle according to claim 1, wherein the power transmission system for the vehicle has a second braking energy recycling mode, and when the power transmission system for the vehicle is in the second braking energy recycling mode, the mode conversion device is power-coupled to the speed change unit output portion and the system power output portion, power from wheels of the vehicle drives the first motor generator unit sequentially through the system power output portion, the mode conversion device, and the speed change unit output portion to perform power generation, and the mode conversion device accelerates the power received from the system power output portion and outputs the accelerated power to the speed change unit output portion.

59. The power transmission system for a vehicle according to claim 1, wherein the power transmission system for the vehicle has a reverse-drive starting mode, and when the power transmission system for the vehicle is in the reverse-drive starting mode, the power output by the first motor generator unit is output to the power source through the speed change unit output portion, to drive the power source to start.

60. The power transmission system for a vehicle according to claim 40 or 41, wherein the power transmission system for the vehicle has a first stationary power generation mode, and when the power transmission system for the vehicle is in the first stationary power generation mode, the second motor generator is power-coupled to the power source, the mode conversion device disconnects the speed change unit output portion from the system power output portion, and the power output by the power source directly drives the second motor generator to perform power generation.

61. The power transmission system for a vehicle according to claim 40 or 41, wherein the power transmission system for the vehicle has a second stationary power generation mode, and when the power transmission system for the vehicle is in the second stationary power generation mode, the second motor generator is power-coupled to the power source, the second motor generator is power-coupled to and the speed change unit, the mode conversion device disconnects the speed change unit output portion from the system power output portion, a part of the power output by the power source directly drives the second motor generator to perform power generation, and another part of the power output by the power source is output to the first motor generator unit sequentially through the second motor generator, the speed change unit output portion, and the mode conversion device and drives the first motor generator unit to perform power generation.

62. The power transmission system for a vehicle according to claim 40 or 41, wherein the power transmission system for the vehicle has a third driving power generation mode, and when the power transmission system for the vehicle is in the third driving power generation mode, the power source works, the second motor generator is power-coupled to the power source, the second motor generator is power-coupled to and the speed change unit, the mode conversion device is power-coupled to the speed change unit output portion and the system power output portion, a part of the power output by the power source is output to the system power output portion sequentially through the speed change unit output portion and the mode conversion device, the mode conversion device outputs, to the system power output portion at an original speed, the power received from the speed change unit output portion or decelerates the power received from the speed change unit output portion and then outputs the decelerated power to the system power output portion, and another part of the power output by the power source directly drives the second motor generator to perform power generation.

63. The power transmission system for a vehicle according to claim 40 or 41, wherein the power transmission system for the vehicle has a fourth driving power generation mode, and when the power transmission system for the vehicle is in the fourth driving power generation mode, the power source works, the second motor generator is power-coupled to the power source, the second motor generator is power-coupled to and the speed change unit, the mode conversion device is power-coupled to the speed change unit output portion and the system power output portion, a first part of the power output by the power source is output to the system power output portion sequentially through the speed change unit output portion and the mode conversion device, the mode conversion device outputs, to the system power output portion at an original speed, the power received from the speed change unit output portion or decelerates the power received from the speed change unit output portion and then outputs the decelerated power to the system power output portion, a second part of the power output by the power source is output to the first motor generator unit through the speed change unit output portion, to drive the first motor generator unit to perform power generation, and a third part of the power output by the power source directly drives the second motor generator to perform power generation.

64. The power transmission system for a vehicle according to claim 40 or 41, wherein the power transmission system for the vehicle has a rapid starting mode, and when the power transmission system for the vehicle is in the rapid starting mode, the second motor generator is power-coupled to the power source, and the power output by the second motor generator directly drives the power source to start.

65. The power transmission system for a vehicle according to claim 41, wherein the power transmission system for the vehicle has a third braking energy recycling mode, and when the power transmission system for the vehicle is in the third braking energy recycling mode, the mode conversion device is power-coupled to the speed change unit output portion and the system power output portion, the second motor generator is disconnected from the engine, power from wheels of the vehicle drives the second motor generator unit sequentially through the system power output portion, the mode conversion device, and the speed change unit output portion to perform power generation, and the mode conversion device outputs, to the speed change unit output portion at an original speed, the power received from the system power output portion.

66. The power transmission system for a vehicle according to claim 41, wherein the power transmission system for the vehicle has a fourth braking energy recycling mode, and when the power transmission system for the vehicle is in the fourth braking energy recycling mode, the mode conversion device is power-coupled to the speed change unit output portion and the system power output portion, the second motor generator is disconnected from the engine, power from wheels of the vehicle drives the second motor generator unit sequentially through the system power output portion, the mode conversion device, and the speed change unit output portion to perform power generation, and the mode conversion device accelerates the power received from the system power output portion and outputs the accelerated power to the speed change unit output portion.

67. A power transmission system for a vehicle, comprising:
a power source;
a double clutch, wherein the double clutch has an input end, a first output end and a second output end, and an output end of the power source is connected to the input end of the double clutch;
a first input shaft and a second input shaft, wherein the first input shaft is connected to the first output end, the second input shaft is connected to the second output end, the second input shaft is coaxially sleeved on the first input shaft, and at least one driving gear is fixedly disposed on each of the first input shaft and the second input shaft;
a first output shaft and a second output shaft, wherein at least one driven gear is freely sleeved on each of the first output shaft and the second output shaft, the at least one driven gear is correspondingly meshed with the at least one driving gear, one of the at least one driving gear is a reverse-gear driving gear, and one of the at least one driven gear is an idle gear, and the reverse-gear driving gear cooperates with the idle gear to perform transmission;
a reverse-gear output shaft, wherein a reverse-gear driven gear is freely sleeved on the reverse-gear output shaft, the reverse-gear driven gear cooperates with the idle gear to perform transmission, and each of the driven gear that is not the idle gear and the reverse-gear driven gear is selectively connected to a corresponding output shaft;
a first motor generator;
three main reducer driving gears, wherein the three main reducer driving gears comprise a first output gear fixedly disposed on the first output shaft, a second output gear fixedly disposed on the second output shaft, and a motor output gear fixedly disposed on the reverse-gear output shaft, and the motor output gear is power-coupled to the first motor generator;
a main reducer driven gear, wherein the main reducer driven gear is meshed with each of the main reducer driving gears;
a system power output portion, wherein the main reducer driven gear is selectively connected to an input end of the system power output portion, so that power received by the main reducer driven gear is suitable for being output to the system power output portion at an original speed or being decelerated and then output to the system power output portion, and the system power output portion is suitable for outputting the power from the main reducer driven gear to two front wheels; and
a rear wheel motor generator, wherein the rear wheel motor generator drives two rear wheels through a speed reduction mechanism.

68. A power transmission system for a vehicle, comprising:
a power source;
a double clutch, wherein the double clutch has an input end, a first output end and a second output end, and an output end of the power source is connected to the input end of the double clutch;
a first input shaft and a second input shaft, wherein the first input shaft is connected to the first output end, the second input shaft is connected to the second output end, the second input shaft is coaxially sleeved on the first input shaft, at least one first driving gear is fixedly disposed on and at least one second driving gear is freely sleeved on each of the first input shaft and the second input shaft, a reverse-gear driving gear is further fixedly disposed on one of the second input shaft and the first input shaft, and the at least one second driving gear is selectively connected to a corresponding input shaft;
a power output shaft, wherein a reverse-gear driven gear and at least one first driven gear are freely sleeved on the power output shaft, the at least one first driven gear is correspondingly meshed with the at least one first driving gear, at least one second driven gear is fixedly disposed on the power output shaft, the at least one second driven gear is correspondingly meshed with the at least one second driving gear, and each of the reverse-gear driven gear and the at least one first driven gear is selectively connected to the power output shaft;
a reverse-gear intermediate shaft, wherein an idle gear is fixedly disposed on the reverse-gear intermediate shaft, and the idle gear is meshed with the reverse-gear driving gear and is meshed with the reverse-gear driven gear;
a first motor generator, wherein the first motor generator is power-coupled to the power output shaft;
a main reducer driving gear, wherein the main reducer driving gear is fixedly disposed on the power output shaft;
a main reducer driven gear, wherein the main reducer driven gear is meshed with the main reducer driving gear;
a system power output portion, wherein the main reducer driven gear is selectively connected to an input end of the system power output portion, so that power received by the main reducer driven gear is suitable for being output to the system power output portion at an original speed or being decelerated and then output to the system power output portion, and the system power output portion is suitable for outputting the power from the main reducer driven gear to two front wheels; and
a rear wheel motor generator, wherein the rear wheel motor generator drives two rear wheels through a speed reduction mechanism.

69. A vehicle, comprising the power transmission system for a vehicle according to any one of claims 1 to 68.
